(19) Europäisches Patentamt
European Patent Office
Office européen des brevets

(11) **EP 4 290 422 A1**

(12) **EUROPEAN PATENT APPLICATION**

(43) Date of publication:
**13.12.2023  Bulletin 2023/50**

(21) Application number: **23164271.1**

(22) Date of filing: **27.03.2023**

(51) International Patent Classification (IPC):
**G06N 10/20** (2022.01)    **G06N 7/01** (2023.01)
**G06N 3/044** (2023.01)    **G06N 10/60** (2022.01)

(52) Cooperative Patent Classification (CPC):
**G06N 3/044; G06N 7/01; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022  JP 2022092839**

(71) Applicant: **FUJITSU LIMITED**
**Kawasaki-shi, Kanagawa 211-8588 (JP)**

(72) Inventor: **KANDA, Kouichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, AND INFORMATION PROCESSING PROGRAM**

(57)    An information processing apparatus includes a storage unit that stores $N^2$ state variables included in an energy function of an Ising model, values of the $N^2$ state variables being determined based on a constraint that the $N^2$ state variables are arranged in N rows and N columns; and a processing unit that searches for a solution to a permutation optimization problem by switching fixing and non-fixing a value of a state variable of a K-th row and an L-th column in N rows and N columns to 1; and repeating changing values of four state variables of the $N^2$ state variables in accordance with a change amount of a value of the energy function when the values of the four state variables are changed to satisfy the constraint.

FIG. 1

| STEP COUNT | REPLACEMENT CANDIDATE | STATE | | | | | |
|---|---|---|---|---|---|---|---|
| … | … | … | … | … | … | … | 6 |
| α+1 | 1,2 | 1 | 2 | 3 | 4 | 5 | 6 |
| α+2 | 1,3 | 1 | 2 | 3 | 4 | 5 | 6 |
| α+3 | 1,4 | 1 | 2 | 3 | 4 | 5 | 6 |
| α+4 | 1,5 | 1 | 2 | 3 | 4 | 5 | 6 |
| α+5 | 2,3 | 1 | 2 | 3 | 4 | 5 | 6 |
| … | … | 1 | 2 | 3 | 4 | 5 | 6 |
| α+10 | 4,5 | 1 | 2 | 3 | 4 | 5 | 6 |
| α+11 | — | 1 | 2 | 3 | 4 | 5 | 6 |
| α+12 | 1,6 | 6 | 2 | 3 | 4 | 5 | 1 |
| … | … | … | … | … | … | … | … |
| β | … | 6 | 1 | 2 | 3 | 5 | 4 |
| … | … | … | … | … | … | … | 4 |
| γ | … | 6 | 2 | 3 | 1 | 5 | 4 |
| … | … | … | … | … | … | … | 4 |
| δ | … | 2 | 5 | 1 | 3 | 4 | 6 |
| … | … | … | … | … | … | … | 6 |

FIX REDUNDANT ELEMENT "6"

CANCEL FIXING

FIX REDUNDANT ELEMENT "6"

EP 4 290 422 A1

**Description**

FIELD

The embodiments discussed herein are related to an information processing apparatus, an information processing method, and an information processing program.

BACKGROUND

An information processing apparatus may be used for searching for a solution to a combinatorial optimization problem. The combinatorial optimization problem is converted into an energy function of an Ising model, which is a model representing a behavior of a spin of a magnetic body. The energy function may be referred to as an evaluation function or an objective function.

For example, the information processing apparatus searches for a combination that minimizes a value of the energy function among combinations of values of state variables included in the energy function. In this case, a combination of values of state variables that minimizes the value of the energy function corresponds to a ground state or an optimum solution represented by a set of state variables. As a method for acquiring an approximate solution to a combinatorial optimization problem in a practical time, a simulated annealing (SA) method, a replica exchange method, or the like based on a Markov-chain Monte Carlo (MCMC) method is applied.

Meanwhile, some combinatorial optimization problems have a constraint in which the number of state variables having a value of 1 among a plurality of state variables included in an energy function is only one, for example, a 1-Hot constraint. According to the 1-Hot constraint, when $N^2$ state variables are arranged in a matrix of N rows and N columns, a sum of values of the state variables included in each row and each column is 1. The 1-Hot constraint is referred to as a 2-Way 1-Hot constraint. For example, when $x_1$ to $x_9$ are arranged in a matrix shape of 3 rows and 3 columns, a constraint in which $x_1+x_2+x_3 = 1$, $x_4+x_5+x_6 = 1$, $x_7+x_8+x_9 = 1$, $x_1+x_4+x_7 = 1$, $x_2+x_5+x_8 = 1$, and $x_3+x_6+x_9 = 1$ is the 2-Way 1-Hot constraint. A traveling salesman problem, a vehicle routing problem, a quadratic assignment problem, a linear ordering problem, and the like have the 2-Way 1-Hot constraint.

A value of each state variable in N rows and N columns may be represented by a permutation of N different elements in the combinatorial optimization problem having the 2-Way 1-Hot constraint. For example, assuming that three different elements are represented by "1, 2, 3", the value of each state variable in the 3 rows and 3 columns is represented by (1, 2, 3), (2, 1, 3), or the like. For example, a position of an element of a permutation indicates a row, and a value of the element of the permutation indicates a column of a state variable, which is 1. In this manner, a solution satisfying the 2-Way 1-Hot constraint is represented by a permutation. A combinatorial optimization problem in which the solution is represented by the permutation is referred to as a permutation optimization problem.

For example, there is a proposal for an optimization apparatus that searches for a solution to the combinatorial optimization problem by using the 2-Way 1-Hot constraint.

There is another proposal for an optimization apparatus that calculates an energy change by changing values of n bits (n is an integer equal to or more than 2) among a plurality of bits corresponding to an Ising model. Based on a magnitude relationship between thermal excitation energy and an energy change determined based on a temperature parameter and a random number, the proposed optimization apparatus selects n bits of which updating is allowed, and changes the values of the n bits.

There is also a proposal for implementing a ground state search of an Ising model having a coefficient in an arbitrary value range, by using an apparatus for performing the ground state search of the Ising model in which a value range of the coefficient is limited. There is also a proposal for a system in which, in searching for a solution to an optimization problem, an entire set of variables is divided into a plurality of subsets, and a combinatorial optimization operation is executed on each subset.

Japanese Laid-open Patent Publication No. 2021-157361, Japanese Laid-open Patent Publication No. 2020-21209, Japanese Laid-open Patent Publication No. 2016-51349, and U.S. Patent No. 2017/0161612 are disclosed as related art.

SUMMARY

[TECHNICAL PROBLEMS]

In the above-described optimization apparatus that searches for a solution to the combinatorial optimization problem having the 2-Way 1-Hot constraint, for example, a permutation optimization problem, values of at most four state variables are changed in one state transition trial. Meanwhile, when a state of a transition destination is determined only from states in which the values of at most four state variables are changed with respect to the current state, for example, in a case where a local solution is reached, it may not be possible to escape from the local solution.

An object of an aspect of the embodiment is to provide an information processing apparatus, an information processing method, and a program capable of improving solution-searching performance.

[SOLUTION TO PROBLEM]

According to an aspect of the embodiments, an information processing apparatus includes a storage unit that stores $N^2$ state variables (N is an integer equal to or more than 4) included in an energy function of an Ising model, values of the $N^2$ state variables being determined based on a constraint that the $N^2$ state variables are arranged in N rows and N columns, a sum of values of state variables included in each row is 1 and a sum of values of state variables included in each column is 1; and a processing unit that searches for a solution to a permutation optimization problem represented by the energy function by executing a first process and a second process, wherein the first process includes: fixing a value of a state variable of a K-th row (K is a natural number equal to or less than N) and an L-th column (L is a natural number equal to or less than N) in N rows and N columns to 1; and repeating changing values of four state variables of the $N^2$ state variables in accordance with a first change amount of a value of the energy function when the values of the four state variables are changed to satisfy the constraint, and wherein the second process includes: non-fixing the value of the state variable of the K-th row and the L-th column; and repeating changing the values of the four state variables of the $N^2$ state variables in accordance with a second change amount of the value of the energy function when the values of the four state variables are changed to satisfy the constraint.

[ADVANTAGEOUS EFFECTS OF INVENTION]

In the aspect, it is possible to improve solution-searching performance.

BRIEF DESCRIPTION OF DRAWINGS

FIG. 1 is a diagram for describing an information processing apparatus according to a first embodiment;
FIG. 2 is a diagram illustrating a hardware example of an information processing apparatus according to a second embodiment;
FIG. 3 is a diagram illustrating a bit flip control example with 2-Way 1-Hot;
FIGs. 4A and 4B are diagrams illustrating an example of a correspondence relationship between a state and a permutation of an Ising model;
FIG. 5 is a diagram illustrating a functional example of the information processing apparatus;
FIG. 6 is a diagram illustrating an example of a method of adding a redundant element in a QAP;
FIG. 7 is a diagram illustrating an example of adding a redundant variable;
FIG. 8 is a flowchart illustrating a process example of the information processing apparatus;
FIG. 9 is a diagram illustrating an example of switching between operation modes using the redundant element;
FIG. 10 is a diagram illustrates an example of a redundant variable flag according to a third embodiment;
FIG. 11 is a diagram illustrating a change example of the redundant variable flag;
FIG. 12 is a diagram illustrating a functional example of the information processing apparatus;
FIG. 13 is a flowchart illustrating a process example of the information processing apparatus;
FIG. 14 is a flowchart illustrating an operation example of controlling the number of redundant variables; and
FIG. 15 is a flowchart illustrating an operation example of suppressing a transition by replacement of the redundant elements.

DESCRIPTION OF EMBODIMENTS

Hereinafter, the present embodiments will be described with reference to the drawings.

[First Embodiment]

A first embodiment will be described.

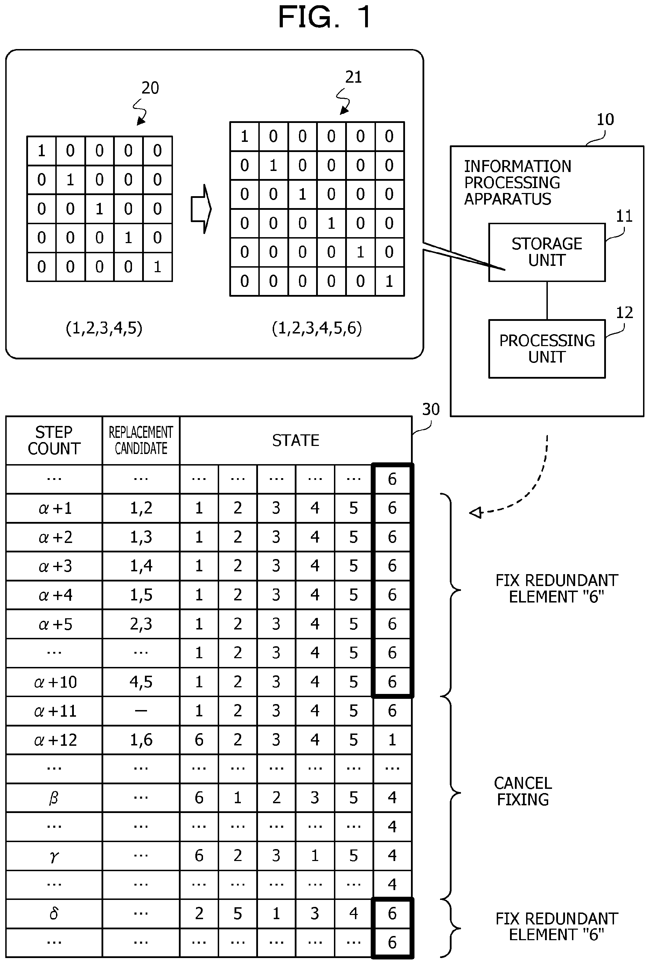

FIG. 1 is a diagram illustrating an information processing apparatus according to the first embodiment.
An information processing apparatus 10 searches for a solution to a combinatorial optimization problem by using an MCMC method, and outputs the searched solution. For example, the information processing apparatus 10 uses an SA method or the like based on the MCMC method to search for the solution. The information processing apparatus 10 includes a storage unit 11, and a processing unit 12.

As the storage unit 11, for example, a volatile storage device such as a random-access memory (RAM) is used. The storage unit 11 may include an electronic circuit such as a register. The processing unit 12 may be an electronic circuit such as a central processing unit (CPU), a digital signal processor (DSP), an application-specific integrated circuit (ASIC), a field-programmable gate array (FPGA), or a graphics processing unit (GPU). The processing unit 12 may be a processor that executes a program. The "processor" may include a set of a plurality of processors (multiprocessor).

The combinatorial optimization problem is formulated by an Ising-type energy function, and is replaced with, for example, a problem that minimizes a value of an energy function. The energy function may also be referred to as an objective function, an evaluation function, or the like. The energy function includes a plurality of state variables. The state variable is a binary variable having a value of 0 or 1. The state variable may also be referred to as a bit. A solution to the combinatorial optimization problem is represented by values of the plurality of state variables. The solution that minimizes the value of the energy function represents a ground state of an Ising model, and corresponds to an optimum solution to the combinatorial optimization problem. The value of the energy function is represented as energy.

The Ising-type energy function is represented by Equation (1).

$$E(\boldsymbol{x}) = -\sum_{\langle i,j \rangle} W_{ij} x_i x_j - \sum_i b_i x_i \tag{1}$$

A state vector x has a plurality of state variables as elements, and represents a state of the Ising model. Equation (1) is an energy function formulated in a quadratic unconstrained binary optimization (QUBO) form. In a case of a problem of maximizing energy, a sign of the energy function may be reversed.

A first term on the right side of Equation (1) is obtained by integrating a product of values of two state variables and a weight coefficient without omission and duplication for all combinations of two state variables that are selectable from all state variables. Subscripts i and j are indices of state variables. $x_i$ is an i-th state variable. $x_j$ is a j-th state variable. $W_{ij}$ is a weight between the i-th state variable and the j-th state variable or a weight coefficient indicating a strength of coupling. $W_{ij} = W_{ji}$, and $W_{ii} = 0$.

A second term on the right side of Equation (1) is a sum of a product of a value of the state variable and a bias for each of all the state variables. $b_i$ indicates a bias for the i-th state variable. Problem data including the weight coefficient, the bias, or the like included in the energy function is stored in the storage unit 11. In Equation (1), when the value of the state variable $x_i$ is changed to $1-x_i$, an increase in $x_i$ may be represented as $\delta x_i = (1-x_i)-x_i = 1-2x_i$. A change amount $\Delta E_i$ of energy according to a change in $x_i$ is represented by Equation (2).

$$\begin{aligned}
\Delta E_i &= E(\boldsymbol{x})\Big|_{x_i \to 1-x_i} - E(\boldsymbol{x}) \\
&= -\delta x_i \left( \sum_j W_{ij} x_j + b_i \right) \\
&= -\delta x_i h_i \\
&= \begin{cases} -h_i & for\ x_i = 0 \to 1 \\ +h_i & for\ x_i = 1 \to 0 \end{cases}
\end{aligned} \tag{2}$$

$h_i$ is referred to as a local field, and is represented by Equation (3). The local field may also be referred to as a local field (LF).

$$h_i = \sum_j W_{ij} x_j + b_i \tag{3}$$

A change amount $\delta h_i^{(j)}$ of the local field $h_i$ when the state variable $x_j$ is changed is represented by Equation (4).

$$\delta h_i^{(j)} = \begin{cases} +W_{ij} & for \ x_j = 0 \to 1 \\ -W_{ij} & for \ x_j = 1 \to 0 \end{cases} \quad (4)$$

By adding the change amount $\delta h_i^{(j)}$ to $h_i$ when the value of the state variable $x_j$ is changed, $h_i$ corresponding to a state after the change of the value of $x_j$ is obtained.

A Metropolis method or a Gibbs method is used for determining whether or not a state transition in which an energy change is $\Delta E_i$, for example, the change of the value of the state variable $x_i$ is allowed, in a search for the ground state. For example, in a neighbor search for searching for a transition from a certain state to another state in which energy is lower than energy of the state, the transition to not only a state in which energy is lowered but also a state in which energy is increased is stochastically allowed. For example, a probability A of accepting the change in value of the state variable of the energy change $\Delta E$ is represented by Equation (5).

$$A(\Delta E) = \begin{cases} \min \left[ 1, \exp(-\beta \cdot \Delta E) \right] & \text{Metropolis} \\ 1/ \left[ 1 + \exp \left( \beta \cdot \Delta E \right) \right] & \text{Gibbs} \end{cases} \quad (5)$$

$\beta$ is a reciprocal number ($\beta = 1/T$) of a temperature value T (T > 0), and is referred to as an inverse temperature. An operator min indicates a minimum value of arguments. An upper right side of Equation (5) corresponds to the Metropolis method. A lower right side of Equation (5) corresponds to the Gibbs method. The processing unit 12 compares a uniform random number u satisfying 0 < u < 1 with A for a certain index i, and when u < A, the processing unit 12 accepts a change in value of the state variable $x_i$ and changes the value of the state variable $x_i$. Unless u < A, the processing unit 12 does not accept the change in value of the state variable $x_i$ and does not change the value of the state variable $x_i$. According to Equation (5), as $\Delta E$ is a larger value, A is smaller. As $\beta$ is smaller, for example, T is lager, a state transition in which $\Delta E$ is larger is more likely to be allowed. For example, in a case where a determination criterion of the Metropolis method is used, the transition determination may be performed by Equation (6) obtained by modifying Equation (5).

$$\ln(u) \times T \leq -\Delta E \quad (6)$$

For example, in a case where the energy change $\Delta E$ satisfies Equation (6) with respect to the uniform random number u ($0 < u \leq 1$), the change in value of the corresponding state variable is allowed. For the uniform random number u, in a case where the energy change $\Delta E$ does not satisfy Equation (6), the change in value of the corresponding state variable is not allowed. $\ln(u) \cdot T$ corresponds to a thermal noise. For example, in the SA method, a solution is searched while gradually decreasing the temperature value T from a maximum temperature value to a minimum temperature value.

The processing unit 12 efficiently solves the combinatorial optimization problem having the 2-Way 1-Hot constraint, for example, a permutation optimization problem by excluding the search for a state other than the state satisfying the 2-Way 1-Hot constraint. The permutation optimization problem is a problem for obtaining a permutation that minimizes or maximizes a value of an energy function, the permutation being represented by values of $N^2$ state variables. In a case of excluding the search for the state other than the state satisfying the 2-Way 1-Hot constraint, the processing unit 12 changes the values of the four state variables in one state transition.

Hereinafter, it is assumed that $M^2$ state variables (M is an integer equal to or more than 3) included in the energy function have the 2-Way 1-Hot constraint. By changing the values of the four state variables in one state transition so as to satisfy a constraint in which a sum of the values of the state variables included in each row and each column when these state variables are arranged in M rows and M columns is 1, a search for a state other than a state satisfying the 2-Way 1-Hot constraint is excluded. For example, in a case where the $M^2$ state variables are arranged in M rows and M columns, $x_1$ to $x_M$ correspond to a first column to an M-th column of a first row, $x_{M+1}$ to $x_{2M}$ correspond to a first column to an M-th column of a second row, and then $x_{M^2-M+1}$ to $x_{M^2}$ correspond to a first column to an M-th column of an M-th row, in the same manner.

In a case where one of the state variables having a value of 0 is set as an update target candidate in a state in which the 2-Way 1-Hot constraint is satisfied, state variables of other three update target candidates are determined.

For example, it is assumed that values of four state variables ($x_i$, $x_j$, $x_k$, $x_l$) of index = i, j, k, l (i < j < k < l) are changed. $x_i$ and $x_j$ belong to the same row. $x_i$ and $x_k$ belong to the same column. $x_k$ and $x_l$ belong to the same row. $x_j$ and $x_l$ belong to the same column.

In a case where $x_j$, which is a state variable having a value of 0, is an update target candidate, $x_i$ and $x_l$, which

are state variables having a value of 1 among the state variables included in the same row and the same column as $x_j$, are the update target candidates. $x_k$ having a value of 0 in the same column as $x_i$ and in the same row as $x_l$ is the update target candidate. The changes in values of these four state variables ($x_i$, $x_j$, $x_k$, $x_l$) may be represented by Equation (7).

$$x_i : 1 \rightarrow 0, \quad x_j : 0 \rightarrow 1, \quad x_k : 0 \rightarrow 1, \quad x_l : 1 \rightarrow 0 \qquad (7)$$

Assuming that an energy change of the Ising model occurring in a case where the values of four state variables ($x_i$, $x_j$, $x_k$, $x_l$) are changed is $\Delta E_j$, $\Delta E$; may be represented by the following Equation (8).

$$\Delta E_j = (h_i + h_l) - (h_j + h_k) - (W_{il} + W_{jk}) \qquad (8)$$

A change amount $\Delta h_m$ (m = 1, 2, ..., and n) of a local field according to a change in $x_i$, $x_j$, $x_k$, and $x_l$ is represented by the following Equation (9).

$$\Delta h_m = W_{mj} + W_{mk} - (W_{mi} + W_{ml}) \qquad (9)$$

In this manner, in the permutation optimization problem, $\Delta E$; of Equation (8) is used for $\Delta E$ of Equation (5) or Equation (6). $\Delta h_m$ in Equation (9) is used instead of $6h_i^{(j)}$ in Equation (4). The storage unit 11 holds the values of the $M^2$ state variables. The storage unit 11 holds a local field $h_m$ corresponding to each of the $M^2$ state variables. Based on $h_m$ held in the storage unit 11, the processing unit 12 calculates $\Delta E_j$. Based on $\Delta E$; and Equation (5) or Equation (6), the processing unit 12 determines four state variables of which values are allowed to be changed. Among the $M^2$ state variables held in the storage unit 11, the processing unit 12 transitions a state of the Ising model, by changing the values of four state variables of which the values are allowed to be changed. As the values of the four state variables are changed, the processing unit 12 updates $h_m$ held in the storage unit 11 to $h_m = h_m + \Delta h_m$.

For example, the processing unit 12 may repeatedly perform a process of sequentially selecting four state variables to be change candidates, performing calculation of $\Delta E$; or determination of Equation (5) or Equation (6), and changing values of the four state variables of which the values are allowed to be changed. Alternatively, the processing unit 12 may perform the calculation of $\Delta E_j$ and the determination of Equation (5) or Equation (6) in parallel, for a plurality of sets of four state variables of the change candidates. In this case, the processing unit 12 repeatedly performs a process of randomly selecting one from a set of which a value change is allowed, and changing the values of four state variables belonging to the set.

In this manner, the processing unit 12 has a mechanism of changing the values of at most four state variables in one trial of a state transition in searching for a solution to the permutation optimization problem. The value of each state variable in M rows and M columns may be represented by a permutation. For example, a position of an element of a permutation indicates a row, and a value of the element of the permutation indicates a column of a state variable, which is 1. FIG. 1 illustrates a case of M = 5, for example, a permutation (1, 2, 3, 4, 5) corresponding to one state 20 represented by a total of 25 state variables of 5 rows and 5 columns. For example, a p-th value q from a left of the permutation indicates that an element of a p-th row from a top and a q-th column from a left of a matrix indicated by the state 20 is 1. The p-th value q from the left of the permutation may indicate that an element in a p-th column from a left and a q-th row from a top of the matrix indicated by the state 20 is 1.

An operation of changing the values of at most the four state variables by the processing unit 12 corresponds to an operation of exchanging positions of arbitrary two elements in the permutation. Meanwhile, with one operation by the processing unit 12, it is only possible to exchange the two elements such as (1, 2, 4, 3, 5), (1, 4, 3, 2, 5), and (4, 2, 3, 1, 5), for the original permutation (1, 2, 3, 4, 5).

When a state of the next transition destination is determined by such an operation, for example, in a case where a local solution is reached, it may not be possible to escape from the local solution, and a more appropriate solution may not be obtained.

Therefore, the processing unit 12 adds $N^2 - M^2$ state variables corresponding to redundant elements in the permutation to the original state variables of M rows and M columns to obtain state variables of N rows and N columns. N is an integer more than M. The redundant element is an element introduced for convenience to search for a solution. As an example, the processing unit 12 adds a redundant element "6" to the permutation (1, 2, 3, 4, 5) corresponding to the state 20 to obtain a permutation (1, 2, 3, 4, 5, 6). In this case, N = 6. The permutation (1, 2, 3, 4, 5, 6) corresponds to a state 21 represented by state variables of 6 rows and 6 columns. In the example of the state 21, a state variable belonging to the sixth row and a state variable belonging to the sixth column are the state variables corresponding to the redundant element "6".

In this case, an energy function is formulated for a total of 36 state variables of 6 rows and 6 columns such that the redundant element "6" does not affect a solution to the permutation optimization problem in a case where the redundant element "6" is at a predetermined position of the permutation, for example, at an end. The case where the redundant element "6" is at the end of the permutation corresponds to a case where a value of the state variable in the sixth row and the sixth column is 1.

For example, as the permutation optimization problem, there is a quadratic assignment problem (QAP). In the QAP, a flow matrix F and a distance matrix D are used to calculate a weight coefficient matrix W. The flow matrix F is represented by Equation (10). The distance matrix D is represented by Equation (11).

$$\mathbf{F} = \begin{pmatrix} f_{11} & f_{12} & f_{13} & f_{14} & f_{15} \\ f_{21} & f_{22} & f_{23} & f_{24} & f_{25} \\ f_{31} & f_{32} & f_{33} & f_{34} & f_{35} \\ f_{41} & f_{42} & f_{43} & f_{44} & f_{45} \\ f_{51} & f_{52} & f_{53} & f_{54} & f_{55} \end{pmatrix} \tag{10}$$

$$\mathbf{D} = \begin{pmatrix} d_{11} & d_{12} & d_{13} & d_{14} & d_{15} \\ d_{21} & d_{22} & d_{23} & d_{24} & d_{25} \\ d_{31} & d_{32} & d_{33} & d_{34} & d_{35} \\ d_{41} & d_{42} & d_{43} & d_{44} & d_{45} \\ d_{51} & d_{52} & d_{53} & d_{54} & d_{55} \end{pmatrix} \tag{11}$$

For example, in a case where F is an asymmetric matrix and D is a target matrix, the weight coefficient matrix W is represented by Equation (12).

$$\mathbf{W} = \begin{pmatrix} \mathbf{0} & (f_{12}+f_{21})\mathbf{D} & \cdots & (f_{1n}+f_{n1})\mathbf{D} \\ (f_{12}+f_{21})\mathbf{D} & \mathbf{0} & \cdots & (f_{2n}+f_{n2})\mathbf{D} \\ \vdots & \vdots & \ddots & \vdots \\ (f_{1n}+f_{n1})\mathbf{D} & (f_{2n}+f_{n2})\mathbf{D} & \cdots & \mathbf{0} \end{pmatrix} \tag{12}$$

In a case where the redundant element "6" is added, the flow matrix F is converted into a flow matrix F' represented by Equation (13). The distance matrix D is converted into a distance matrix D' represented by Equation (14).

$$\mathbf{F'} = \begin{pmatrix} f_{11} & f_{12} & f_{13} & f_{14} & f_{15} & 0 \\ f_{21} & f_{22} & f_{23} & f_{24} & f_{25} & 0 \\ f_{31} & f_{32} & f_{33} & f_{34} & f_{35} & 0 \\ f_{41} & f_{42} & f_{43} & f_{44} & f_{45} & 0 \\ f_{51} & f_{52} & f_{53} & f_{54} & f_{55} & 0 \\ 0 & 0 & 0 & 0 & 0 & 0 \end{pmatrix} \tag{13}$$

$$\mathbf{D'} = \begin{pmatrix} d_{11} & d_{12} & d_{13} & d_{14} & d_{15} & 0 \\ d_{21} & d_{22} & d_{23} & d_{24} & d_{25} & 0 \\ d_{31} & d_{32} & d_{33} & d_{34} & d_{35} & 0 \\ d_{41} & d_{42} & d_{43} & d_{44} & d_{45} & 0 \\ d_{51} & d_{52} & d_{53} & d_{54} & d_{55} & 0 \\ 0 & 0 & 0 & 0 & 0 & 0 \end{pmatrix} \qquad (14)$$

In this case, the weight coefficient matrix W is obtained by using elements of the flow matrix F' as the elements of the flow matrix of Equation (12) and using elements of the distance matrix D' as the elements of the distance matrix.

The processing unit 12 sets a bias b of each state variable corresponding to the redundant element to a relatively large positive value, for example, the maximum value, for a state variable for which 1 is initially set, and sets the bias b of each state variable corresponding to the redundant element to a relatively small value, for example, 0, for a state variable for which 0 is initially set. Information on an energy function including W or b may be generated by the processing unit 12, or information generated by another processing unit may be input to the processing unit 12. Based on the energy function, the processing unit 12 searches for a solution to the permutation optimization problem as illustrated in a table 30, for example. In the example of the table 30, it is assumed that an initial state of the search is represented by a predetermined permutation of 6 elements including the redundant element "6" arranged at the end of the permutation.

A step count in the table 30 indicates the number of steps in which a state transition by changes in values of the four state variables is determined. A replacement candidate in the table 30 indicates two elements, which are replacement candidates in the corresponding step. At one step, in a case where a candidate state of the transition destination does not satisfy a determination criterion of Equation (5) or Equation (6), the state transition may not occur at the step. A state reached by a step count "a" immediately before a step count "a+1" corresponds to the state 21 corresponding to the permutation (1, 2, 3, 4, 5, 6).

First, the processing unit 12 fixes a position of the redundant element "6", and changes the state from an initial state to a state satisfying the above-described determination criterion one after another by an operation of exchanging two elements among the elements "1, 2, 3, 4, 5". For example, the processing unit 12 may fix the value of the state variable to 1, by setting a relatively large positive value for the bias of the state variable of the sixth row and the sixth column corresponding to the redundant element "6". Alternatively, the processing unit 12 may provide a control flag indicating that the redundant element "6" is fixed to the initial position in the storage unit 11, and may set the control flag = True. In a case of the control flag = True, the processing unit 12 may fix the value of the state variable to 1, by excluding the state variable of the sixth row and the sixth column from the value change candidates. For the latter case, the processing unit 12 sets the bias of the state variable in the sixth row and the sixth column to a relatively small value from the beginning.

In the example of the table 30, after the permutation (1, 2, 3, 4, 5, 6) is reached in the step count "a" immediately before the step count "a+1", the state is not changed from the same state until a step count "a+10". In the table 30, the step count "a" is not illustrated. This indicates that all energy change amounts in a case where arbitrary two elements of the element "1, 2, 3, 4, 5" are replaced are positive and do not satisfy the determination criterion of Equation (5) or Equation (6). In this case, at a time when a step count is "$\alpha$+11", the processing unit 12 determines that a local solution is reached and cancels the fixing of the position of the redundant element "6". For example, by setting a bias of a state variable of the sixth row and the sixth column to a relatively small value, for example, 0, the processing unit 12 may non-fix a value of the state variable. Alternatively, by setting the above-described control flag = False, and adding the state variable of the sixth row and the sixth column to the value change candidate, the processing unit 12 may non-fix the value of the state variable.

In this case, after a step count "a+12" and before a step count "δ", the processing unit 12 may perform a state transition corresponding to an operation of replacing the redundant element "6" with another element in the permutation. For example, at the step count "a+12", a state represented by the immediately preceding permutation (1, 2, 3, 4, 5, 6) transitions to a state represented by the permutation (6, 2, 3, 4, 5, 1). Focusing on the element "2, 3, 4, 5, 1", the permutation (6, 2, 3, 4, 5, 1) corresponds to a state in which, for example, two elements (1, 2), (1, 3), (1, 4), and (1, 5) are replaced four times in total, with respect to the same element "1, 2, 3, 4, 5" in the immediately preceding permutation.

By using the weight coefficient matrix W based on the flow matrix F' and the distance matrix D' and making the bias of the element "6" relatively small, it becomes easy to move the element "6" to another position in the permutation. This is because, although the elements of the permutation and the positions of the elements affect energy in the QAP, a change in the position of the redundant element "6" does not affect an increase in the value of the energy. Therefore, another element having a large energy contribution is likely to enter the position at which the redundant element "6" originally exists. For example, when the element "4" having a large energy contribution enters the position at which the redundant element "6" originally exists in a step count "β", two elements among the other five elements excluding the element "4" are likely to be replaced.

After the step count "δ" is reached, the processing unit 12 fixes the redundant element "6" at the initial position again. For example, the processing unit 12 may fix the value of the state variable to 1, by setting a relatively large positive value again for the bias of the state variable of the sixth row and the sixth column corresponding to the redundant element "6". For example, the processing unit 12 sets a relatively large positive value for the bias of the state variable of the sixth row and the sixth column, in a step count "γ" before the step count "δ". Accordingly, when the state variable is updated to "1" in the step count "δ", the state variable in the sixth row and the sixth column is fixed to "1", by the effect of the bias. Alternatively, the processing unit 12 may set the control flag = True in the step count "δ", forcibly set the state variable of the sixth row and the sixth column to 1 after the step count "δ", and exclude the state variable from the value change candidates.

After that, in a case where it is determined that a local solution is reached again, the processing unit 12 may execute the state transition in which the fixation of the position of the redundant element "6" is canceled, may then perform a processing of fixing the position of the redundant element "6" to the initial position again, and may continue the search for the solution.

After executing the search for the above-described solution for a predetermined period of time, the processing unit 12 outputs a solution having the lowest energy among the solutions obtained by fixing the redundant element "6" to the initial position. For example, the processing unit 12 may generate a solution obtained by removing the state variable corresponding to the redundant element "6" from the solution having the lowest energy, and may output the generated solution.

As described above, the processing unit 12 may calculate the energy change amounts in parallel for all the transition destination candidates for a certain state, and randomly select one of the transition destination candidates satisfying the determination criterion of Equation (5) or Equation (6) as the next transition destination. In a case where the energy change amount is positive for all the transition destination candidates and all the states of the next transition destination candidate are rejected according to the determination criterion of Equation (5) or Equation (6), the processing unit 12 determines that a local solution is reached.

The position of the redundant element may be an arbitrary position. For example, the processing unit 12 may treat the element "3" in the permutation (1, 2, 3, 4, 5, 6) in an initial state as a redundant element. In this case, for example, when all 0 rows and columns are set in the third row and the third column of the flow matrix F' or the distance matrix D' and the redundant element "3" is at the initial position, the energy function is defined so as not to affect the solution to the permutation optimization problem. Alternatively, the processing unit 12 may treat, for example, the element "6" in the permutation (2, 3, 1, 4, 6, 5) in the initial state as the redundant element. In this case, for example, when all 0 rows and columns are set in the fifth row and the sixth column of the flow matrix F' or the distance matrix D' and the redundant element "6" is at the initial position, the energy function is defined so as not to affect the solution to the permutation optimization problem.

In this manner, with the information processing apparatus 10, a first process and a second process are switched and executed in a search for a solution. In the first process, a process of fixing a value of a state variable of the K-th row and the L-th column (K is a natural number equal to or less than N) (L is a natural number equal to or less than N) when $N^2$ state variables are arranged in N rows and N columns to 1 and changing values of four state variables in accordance with a first change amount of a value of an energy function in a case where the values of the four state variables are changed to satisfy a 2-Way 1-Hot constraint is repeatedly performed. In the second process, a process of non-fixing the value of the state variable of the K-th row and the L-th column and changing the values of the four state variables in accordance with a second change amount of the value of the energy function in a case where the values of the four state variables are changed to satisfy the 2-Way 1-Hot constraint is repeatedly performed.

Therefore, the information processing apparatus 10 may improve the solution-searching performance. For example, in the first process, even in a case where a local solution is reached, by executing the second process and returning to the first process, it is possible to continue the first process and search for a solution in a state of escaping from the local solution. Therefore, the information processing apparatus 10 may increase a possibility of reaching a more appropriate solution.

For example, in the information processing apparatus 10, in a case where a state variable corresponding to a redundant element is not introduced for an energy function, when a local solution is reached, it is also considered to escape from the local solution by performing an operation of changing values of more state variables than four state variables at one time. Meanwhile, as the number of state variables changed at one time is larger, the calculation of the energy change amount and the local field is more complicated, and an operation cost is higher. For example, in a case where the processing unit 12 is implemented by an electronic circuit such as an FPGA, complication of a circuit for the operation also becomes a problem.

By contrast, the information processing apparatus 10 performs a state transition by using a state variable corresponding to a redundant element, which is introduced into an energy function. Therefore, it may be considered that the information processing apparatus 10 equivalently achieves, in the second process, a multi-bit transition, which may not be performed with the existing mechanism, for example, an operation of simultaneously transitioning a number of state variables more than 4, with respect to the state handled in the first process. Therefore, even when in a case where a local solution is reached in the first process, the information processing apparatus 10 may easily escape from the local solution by the second process.

Meanwhile, in the case of the above-described example, since a problem as a solution-searching target is changed in the second process, a solution obtained in the second process may not be used as a solution to the original QAP. For this reason, the processing unit 12 acquires the solution to the original QAP by removing the state variable corresponding to the redundant element from a solution obtained in the first process.

Although the QAP is exemplified as an example of a permutation optimization problem, the function of the information processing apparatus 10 may be applied to a traveling salesman problem (TSP), a vehicle routing problem (VRP), a linear ordering problem (LOP), and the like.

[Second Embodiment]

Next, a second embodiment will be described.

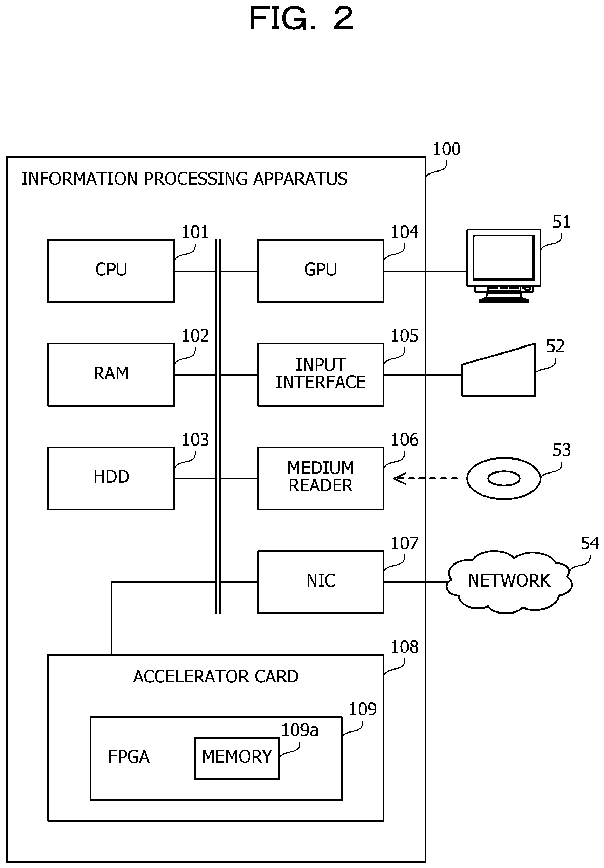

FIG. 2 is a diagram illustrating a hardware example of an information processing apparatus according to a second embodiment.

An information processing apparatus 100 searches for a solution to a combinatorial optimization problem by using an MCMC method, and outputs the searched solution. The information processing apparatus 100 includes a CPU 101, a RAM 102, a hard disk drive (HDD) 103, a GPU 104, an input interface 105, a medium reader 106, a network interface card (NIC) 107, and an accelerator card 108.

The CPU 101 is a processor that executes a command of a program. The CPU 101 loads at least a part of a program or data stored in the HDD 103 into the RAM 102, and executes the program. The CPU 101 may include a plurality of processor cores. The information processing apparatus 100 may have a plurality of processors. Processes described below may be executed in parallel by using a plurality of processors or processor cores. A set of the plurality of processors may be referred to as a "multiprocessor" or merely referred to as a "processor".

The RAM 102 is a volatile semiconductor memory that temporarily stores the program executed by the CPU 101 or data used for an operation by the CPU 101. The information processing apparatus 100 may include memories of types other than the RAM, and may include a plurality of memories.

The HDD 103 is a non-volatile storage device that stores data as well as programs of software such as an operating system (OS), middleware, or application software. The information processing apparatus 100 may include other types of storage devices such as a flash memory and a solid-state drive (SSD), and may include a plurality of non-volatile storage devices.

The GPU 104 outputs an image to a display 51 coupled to the information processing apparatus 100 in accordance with a command from the CPU 101. An arbitrary type of a display such as a cathode ray tube (CRT) display, a liquid crystal display (LCD), a plasma display, or an organic electroluminescence (OEL) display may be used as the display 51.

The input interface 105 acquires an input signal from an input device 52 coupled to the information processing apparatus 100, and outputs the input signal to the CPU 101. As the input device 52, a pointing device such as a mouse, a touch panel, a touchpad, or a trackball, a keyboard, a remote controller, a button switch, or the like may be used. A plurality of types of input devices may be coupled to the information processing apparatus 100.

The medium reader 106 is a reading device that reads a program or data recorded in a recording medium 53. As the recording medium 53, for example, a magnetic disk, an optical disk, a magneto-optical (MO) disk, a semiconductor memory, or the like may be used. The magnetic disk includes a flexible disk (FD) or an HDD. The optical disk includes a compact disc (CD) or a Digital Versatile Disc (DVD).

For example, the medium reader 106 copies a program or data read from the recording medium 53 into another recording medium such as the RAM 102 or the HDD 103. The read program is executed by, for example, the CPU 101. The recording medium 53 may be a portable-type recording medium, and may be used to distribute the program and the data. The recording medium 53 and the HDD 103 will be referred to as computer readable recording medium in some cases.

The NIC 107 is an interface that is coupled to a network 54, and communicates with another computer via the network 54. The NIC 107 is coupled to, for example, a communication device such as a switch or a router through a cable. The NIC 107 may be a wireless communication interface.

The accelerator card 108 is a hardware accelerator that searches for a solution to a problem represented by an Ising-type energy function of Equation (1) by using the MCMC method. The accelerator card 108 accepts problem data indicating information on an energy function from the CPU 101, searches for a solution, and outputs the searched solution.

By performing the MCMC method at a certain temperature or the replica exchange method in which the states of the Ising model are exchanged among a plurality of temperatures, the accelerator card 108 may be used as a sampler that samples a state following a Boltzmann distribution at the corresponding temperature. In order to search for a solution to the combinatorial optimization problem, the accelerator card 108 executes an annealing process such as the replica exchange method or the SA method in which a temperature value is gradually decreased.

The SA method is a method of efficiently finding an optimum solution by sampling a state according to the Boltzmann distribution at each temperature value and decreasing the temperature value used for sampling from a high temperature to a low temperature, for example, increasing an inverse temperature $\beta$. Since the state is changed to some extent even in a case where the low temperature side, for example, $\beta$ is large, there is a high possibility that an appropriate solution may be found even though the temperature value is decreased rapidly. For example, in a case where the SA method is used, the accelerator card 108 repeats an operation of decreasing the temperature value after repeating a trial of state transition a certain number of times at a certain temperature value.

The replica exchange method is a method in which the MCMC method is independently executed using a plurality of temperature values, and temperature values are exchanged as appropriate for states obtained at the respective temperature values. By searching in a narrow range of a state space by the MCMC method at a low temperature and searching in a wide range of the state space by the MCMC method at a high temperature, it is possible to efficiently find an appropriate solution. For example, in a case where the replica exchange method is used, the accelerator card 108 performs the trial of the state transition at each of the plurality of temperature values in parallel, an operation of exchanging temperature values at a predetermined exchange probability for a state obtained at each temperature value, every time a certain number of trials are performed, is repeated.

The accelerator card 108 has an FPGA 109. The FPGA 109 implements a solution search function in the accelerator card 108. The solution search function may be implemented by another type of electronic circuit such as a GPU or an ASIC. The FPGA 109 includes a memory 109a. The memory 109a holds problem data used for searches in the FPGA 109 or solutions searched in the FPGA 109. The memory 109a is, for example, a static random-access memory (SRAM). The FPGA 109 may include a plurality of memories including the memory 109a. The FPGA 109 is an example of the processing unit 12 according to the first embodiment. The memory 109a is an example of the storage unit 11 according to the first embodiment. The accelerator card 108 may have a RAM outside the FPGA 109, and may temporarily save data stored in the memory 109a into the RAM, in accordance with the process of the FPGA 109.

A hardware accelerator that searches for a solution to a problem having an Ising form, such as the accelerator card 108, may be referred to as an Ising machine, a Boltzmann machine, or the like.

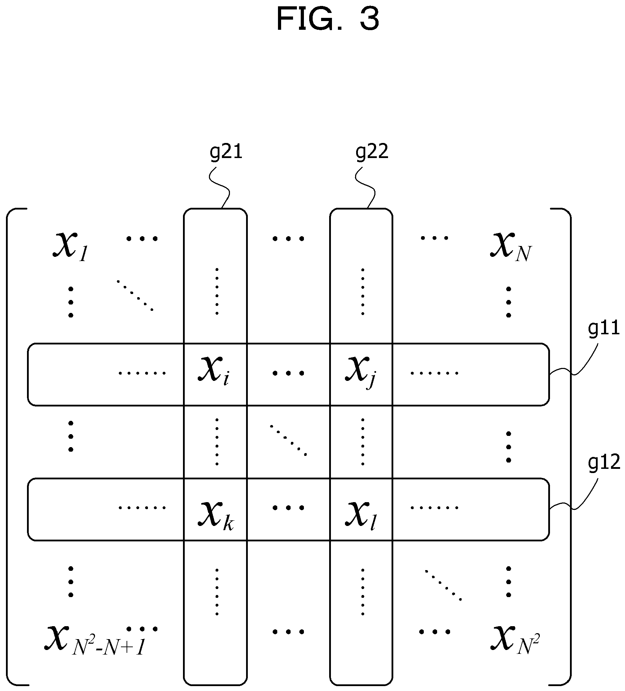

FIG. 3 is a diagram illustrating a bit flip control example with 2-Way 1-Hot.

A constraint condition called a 2-Way 1-Hot constraint may be imposed in a combinatorial optimization problem. The combinatorial optimization problem with 2-Way 1-Hot constraint is referred to as a permutation optimization problem. 2-Way 1-Hot is abbreviated as 2W1H.

A 1-Hot constraint is a constraint in which "there is only one variable having a value of 1 in a certain set of state variables". For example, FIG. 3 illustrates $N^2$ (where N is an integer equal to or more than 4) state variables $x_1$, $x_2$, ... in N rows and N columns. Groups g11 and g12 indicate examples of groups of state variables corresponding to rows. Groups g21 and g22 indicate examples of groups of state variables corresponding to columns. In a case where the 1-Hot constraint is applied to groups of state variables corresponding to rows, a sum of the state variables of each row is equal to 1. For example, a sum of the state variables belonging to the group g11 is equal to 1. A sum of the state variables belonging to the group g12 is equal to 1. Alternatively, in a case where the 1-Hot constraint is applied to groups of state variables corresponding to columns, a sum of the state variables of each column is equal to 1. For example, a sum of the state variables belonging to the group g21 is equal to 1. A sum of the state variables belonging to the group g22 is equal to 1.

According to 2W1H, values of 4 state variables are changed by one operation so as to satisfy two 1-Hot constraints. For example, 4 bit flips as represented in Equation (7) are acquired. i, j, k, and l are a set of indices indicating a set of state variables to be flipped. $i < j < k < l$ is obtained. FIG. 3 illustrates an example of a set of state variables corresponding to the indices i, j, k, and l. In 2W1H, the number of state variables is $N^2$, and each state variable is grouped as a group on which the 1-Hot constraint is imposed in each of N rows and each of N columns. The energy change $\Delta E_i$ in this case is represented by Equation (8). The change amount $\Delta h_m$ of a local field corresponding to the state variable $x_m$ is represented by Equation (9). m = 1, 2, ..., and $N^2$.

In the following, as an example of the permutation optimization problem, a QAP will be described. Meanwhile, the permutation optimization problem may be, for example, a TSP, a VRP, a LOP, and the like.

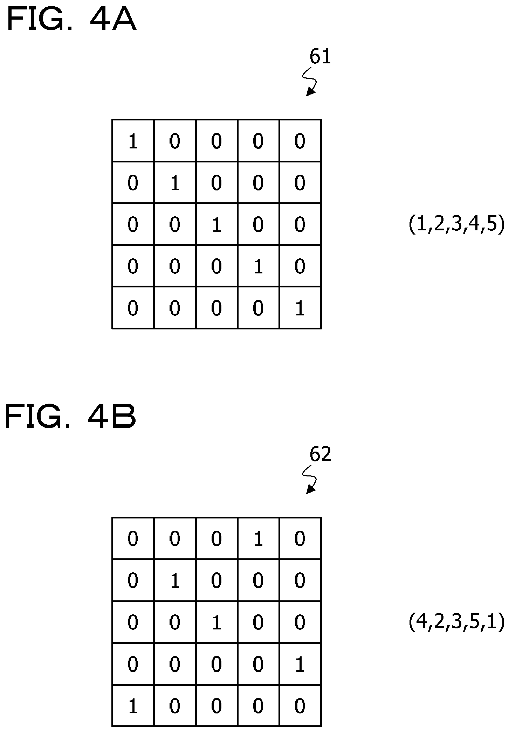

FIGs. 4A and 4B are diagrams illustrating an example of a correspondence relationship between a state and a permutation of an Ising model.

FIG. 4A illustrates a state 61 of the Ising model in a case of N = 5. FIG. 4B illustrates a state 62 of the Ising model in a case of N = 5. Each of the states 61 and 62 is represented by 25 state variables $x_1$ to $x_{25}$. A first row of a matrix indicated by each of the states 61 and 62 is a group of the state variables $x_1$ to $x_5$. A second row is a group of

the state variables $x_6$ to $x_{10}$. A third row is a group of the state variables $x_{11}$ to $x_{15}$. A fourth row is a group of the state variables $x_{16}$ to $x_{20}$. A fifth row is a group of the state variables $x_{21}$ to $x_{25}$. Each state variable is also grouped in a column direction.

In the example of the state 61, values of the state variables of each group in a row direction are as follows. $\{x_1, x_2, x_3, x_4, x_5\}$ = {1, 0, 0, 0, 0}. $\{x_6, x_7, x_8, x_9, x_{10}\}$ = {0, 1, 0, 0, 0}. $\{x_{11}, x_{12}, x_{13}, x_{14}, x_{15}\}$ = {0, 0, 1, 0, 0}. $\{x_{16}, x_{17}, x_{18}, x_{19}, x_{20}\}$ = {0, 0, 0, 1, 0}. $\{x_{21}, x_{22}, x_{23}, x_{24}, x_{25}\}$ = {0, 0, 0, 0, 1}. In this case, the state 61 is represented as a permutation (1, 2, 3, 4, 5). As described above, for example, a p-th value q from a left of the permutation indicates that an element of a p-th row from a top and a q-th column from a left of the matrix indicated by the state 61, the state 62, or the like is 1.

In the example of the state 62, values of the state variables of each group in a row direction are as follows. $\{x_1, x_2, x_3, x_4, x_5\}$ = {0, 0, 0, 1, 0}. $\{x_6, x_7, x_8, x_9, x_{10}\}$ = {0, 1, 0, 0, 0}. $\{x_{11}, x_{12}, x_{13}, x_{14}, x_{15}\}$ = {0, 0, 1, 0, 0}. $\{x_{16}, x_{17}, x_{18}, x_{19}, x_{20}\}$ = {0, 0, 0, 0, 1}. $\{x_{21}, x_{22}, x_{23}, x_{24}, x_{25}\}$ = {1, 0, 0, 0, 0}. In this case, the state 62 is represented by a permutation (4, 2, 3, 5, 1).

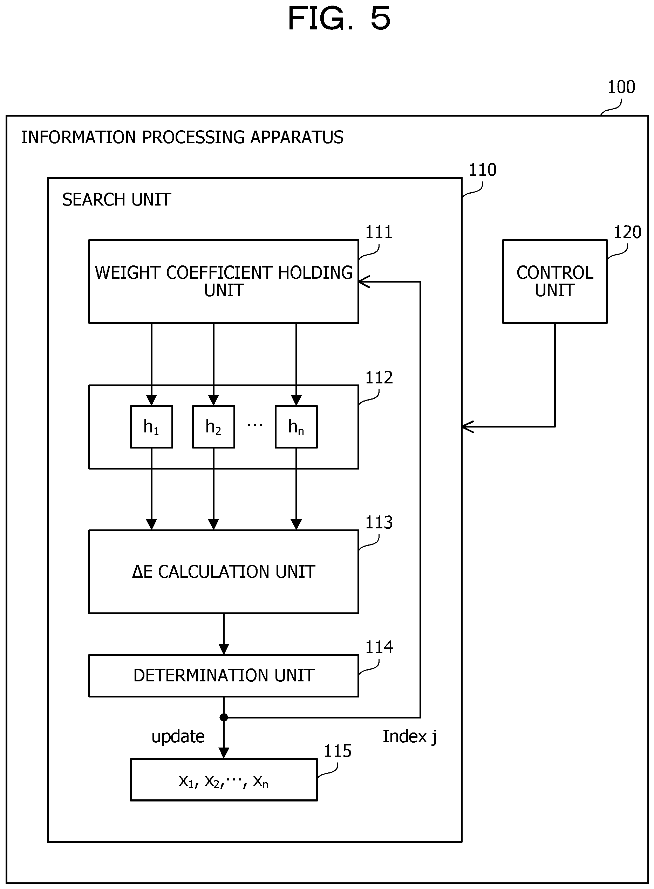

FIG. 5 is a diagram illustrating a functional example of the information processing apparatus.

The information processing apparatus 100 transitions a state of an Ising model so as to satisfy a 2W1H constraint, and efficiently searches for a solution to a permutation optimization problem. The information processing apparatus 100 includes a search unit 110 and a control unit 120. The search unit 110 searches for a solution to a permutation optimization problem by using an SA method or the like. The control unit 120 controls the search unit 110. The search unit 110 and the control unit 120 are implemented by the FPGA 109. The control unit 120 may be implemented by the CPU 101. The search unit 110 includes a weight coefficient holding unit 111, a local-field holding unit 112, a ΔE calculation unit 113, a determination unit 114, and a state holding unit 115. The memory 109a is used as a data storage region in the weight coefficient holding unit 111 and the local-field holding unit 112.

The weight coefficient holding unit 111 holds the weight coefficient matrix W in Equation (1). Based on an index j supplied from the determination unit 114, the weight coefficient holding unit 111 supplies weight coefficients $W_{mi}$, $W_{mj}$, $W_{mk}$, and $W_{ml}$ to the local-field holding unit 121.

The local-field holding unit 112 holds the local fields $h_1$, $h_2$, ..., and $h_n$ based on Equation (3). The local-field holding unit 112 updates the local fields $h_1$, $h_2$, ..., and $h_n$ by Equation (9), based on the weight coefficient matrix W held in the weight coefficient holding unit 111 in accordance with a change in values of the four state variables $x_i$, $x_j$, $x_k$, and $x_l$ by 2W1H. n is the number of all the state variables, and n = $N^2$.

The ΔE calculation unit 113 calculates the energy change ΔE; in a case where the values of the state variables $x_i$, $x_j$, $x_k$, and $x_l$ are changed by Equation (8). For a plurality of state variables set as change candidates, the ΔE calculation unit 113 may calculate a plurality of ΔE in parallel.

Based on Equation (6), the determination unit 114 determines whether or not the change in values of the four state variables $x_i$, $x_j$, $x_k$, and $x_l$ is allowed. In a case of being allowed, the determination unit 114 changes the values of the four state variables $x_i$, $x_j$, $x_k$, and $x_l$ held in the state holding unit 115, and supplies the indices i, j, k, and l to the weight coefficient holding unit 111. In a case where the plurality of ΔE are calculated in parallel by the ΔE calculation unit 113, the determination unit 114 selects any one of a plurality of sets of four state variables of which values are allowed to change, based on Equation (6), and changes values of four state variables belonging to the selected set.

The state holding unit 115 holds the state variables ($x_1$, $x_2$, ..., and $x_n$). By integrating ΔE in accordance with the state transition with respect to energy in an initial state, the state holding unit 115 may hold the energy corresponding to the current state.

The control unit 120 generates information on an energy function obtained by introducing a redundant element to an energy function corresponding to an original problem, and sets the information in the search unit 110. For example, the control unit 120 converts the flow matrix F and the distance matrix D of the original problem in a QAP into the flow matrix F' and the distance matrix D' of Equations (13) and (14), respectively, and generates the weight coefficient matrix W by using Equation (12) for the flow matrix F' and the distance matrix D'. The control unit 120 adds $N^2$-$M^2$ state variables to $M^2$ state variables corresponding to the original problem. In a case where the control unit 120 is implemented in FPGA 109, the generation of the information on the energy function into which the redundant element is introduced may be executed by the CPU 101.

Normally, the control unit 120 fixes a value of the state variable corresponding to the redundant element to 1, and causes the search unit 110 to execute a search for a solution. According to a search status of the solution in the search unit 110, the control unit 120 causes the search unit 110 to execute a search for the solution while non-fixing the value of the state variable corresponding to the redundant element. After that, the control unit 120 fixes the value of the state variable corresponding to the redundant element to 1 again, and causes the search unit 110 to execute a search for the solution. For example, the control unit 120 does not fix the value of the state variable corresponding to the redundant element in a case where a local solution is reached in the search for the solution by the search unit 110.

In this case, an operation mode in which the search unit 110 searches for the solution by fixing the value of the state variable corresponding to the redundant element to 1 is referred to as a normal mode. An operation mode in which the search unit 110 non-fixes the value of the state variable corresponding to the redundant element to prompt state transition is referred to as a local solution escape mode.

By setting a relatively large positive value for the bias b of the state variable corresponding to the redundant element, the control unit 120 fixes the value of the state variable corresponding to the redundant element to 1. By setting a relatively small value for the bias b of the state variable corresponding to the redundant element, the control unit 120 non-fixes the value of the state variable corresponding to the redundant element. For example, the state variable at a specific position to be added as the redundant element, for example, a state variable in the N-th row and the N-th column is preset in the control unit 120 as a target to be normally fixed to 1.

For example, Japanese Laid-open Patent Publication No. 2021-157361 is a reference for a search for a solution by 2W1H in the search unit 110.

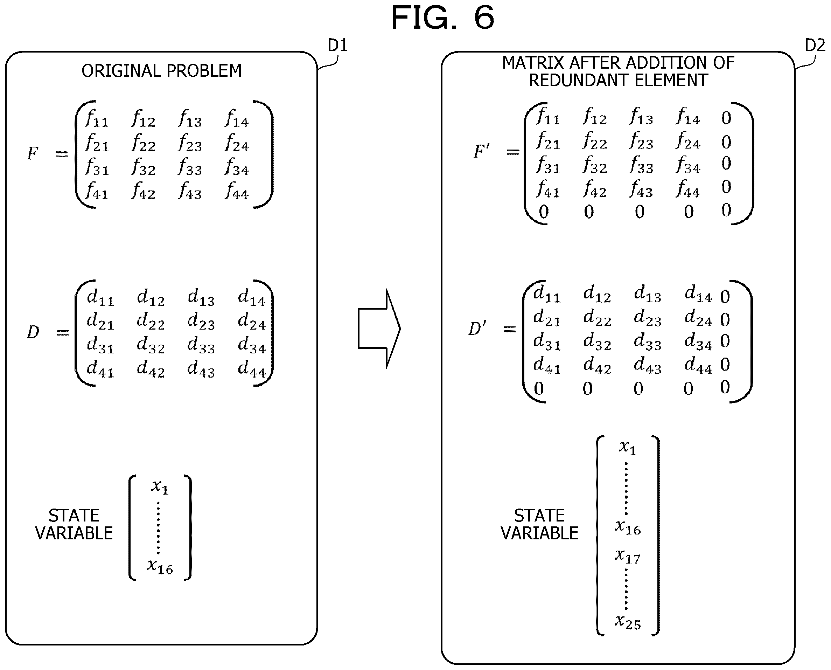

FIG. 6 is a diagram illustrating an example of a method of adding a redundant element in a QAP.

As an example, it is assumed that an original problem is represented by using 16 state variables $x_1$ to $x_{16}$. Problem information D1 indicates the flow matrix F, the distance matrix D, and the state variables ($x_1$, ..., and $x_{16}$) corresponding to the original problem. Both the flow matrix F and the distance matrix D are matrices having 4 rows and 4 columns.

Problem information D2 indicates the flow matrix F', the distance matrix D', and state variables ($x_1$, ..., and $x_{25}$) after a redundant element is added. Both the flow matrix F' and the distance matrix D' are matrices having 5 rows and 5 columns. Each element in the fifth row and each element in the fifth column of each of the flow matrix F' and the distance matrix D' is 0.

The flow matrix F' and the distance matrix D' are referred to as extension matrices. In the QAP, the weight coefficient matrix W is generated by Equation (12) by using extension matrices F' and D'. 9 state variables added to the original 16 state variables $x_1$ to $x_{16}$ are referred to as redundant variables.

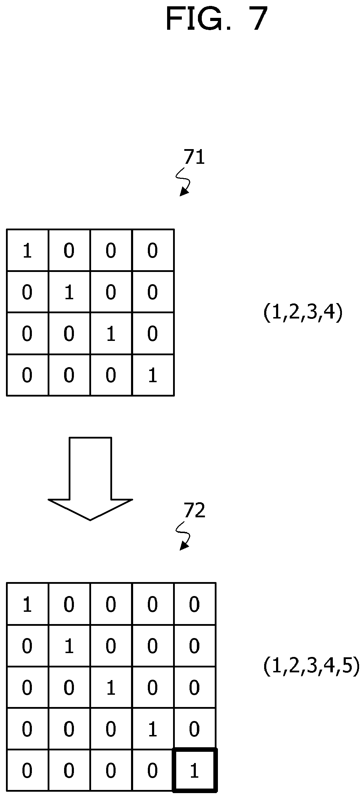

FIG. 7 is a diagram illustrating an example of adding a redundant variable.

In the example illustrated in FIG. 6, the 16 state variables $x_1$ to $x_{16}$ in the original problem indicate a state 71. For example, in a case where $\{x_1, x_2, x_3, x_4\} = \{1, 0, 0, 0\}$, $\{x_5, x_6, x_7, x_8\} = \{0, 1, 0, 0\}$, $\{x_9, x_{10}, x_{11}, x_{12}\} = \{0, 0, 1, 0\}$, and $\{x_{13}, x_{14}, x_{15}, x_{16}\} = \{0, 0, 0, 1\}$, the state 71 is represented by a permutation (1, 2, 3, 4).

After a redundant element "5" is added, 25 state variables $x_1$ to $x_{25}$ indicate a state 72. The state 72 in FIG. 7 is represented by a permutation (1, 2, 3, 4, 5). In this case, for example, a state variable in the fifth row and the fifth column of the state 72 corresponds to the redundant element "5" and is handled as a state variable having a value normally fixed to 1.

In a case where the value of the state variable of the fifth row and the fifth column is fixed to 1, the control unit 120 sets the bias b corresponding to the state variable of the fifth row and the fifth column to a relatively large positive value, for example, a maximum settable value or the like. The control unit 120 sets each bias b corresponding to the other state variable in the fifth row and the other state variable in the fifth column to a relatively small value, for example, 0 or the like.

In a case where the value of the state variable of the fifth row and the fifth column is non-fixed, the control unit 120 sets the bias b corresponding to the state variable of the fifth row and the fifth column to a relatively small value, for example, 0 or the like. When the bias b is set to the relatively small value, the value may be larger than 0 or may be a negative value depending on a magnitude of W.

By using the weight coefficient matrix W generated from the flow matrix F' and the distance matrix D' by Equation (12), in a case where the value of the state variable of the fifth row and the fifth column is fixed to 1, a problem after the addition of the redundant element is equivalent to the original problem.

For example, a case where the element "5" in the permutation (2, 3, 1, 5, 4) in an initial state is set as the redundant element is also conceivable. In this case, the control unit 120 may set, for example, all the elements in the fourth row and the fifth column in the flow matrix F' and the distance matrix D' to 0, and set the state variable in the fourth row and the fifth column among the state variables of the fifth row and the fifth column, as a state variable to be fixed to "1" in a normal mode.

Next, a process procedure for executing a search of a solution to a permutation optimization problem by using an SA method by the information processing apparatus 100 will be described. Although the QAP is exemplified as the permutation optimization problem, the same procedure is applied to a case of other permutation optimization problems.

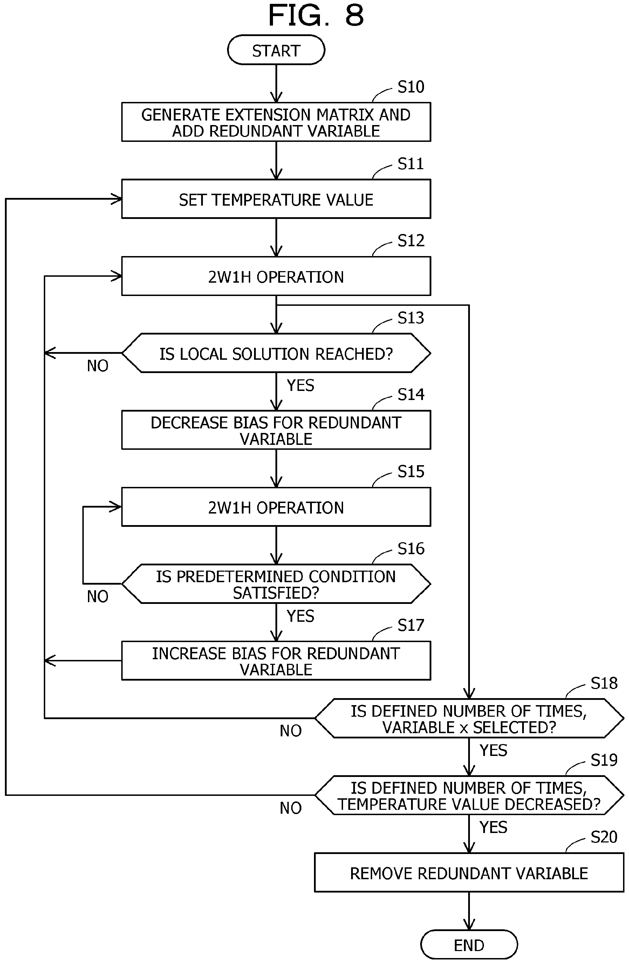

FIG. 8 is a flowchart illustrating a process example of the information processing apparatus.

(S10) The control unit 120 generates an extension matrix based on an input original problem information. For example, the control unit 120 generates the flow matrix F' and the distance matrix D' for the flow matrix F and the distance matrix D indicated by the original problem information of a QAP. Based on the flow matrix F' and the distance matrix D', the control unit 120 generates a weight coefficient matrix by using Equation (12). The control unit 120 sets the generated weight coefficient matrix in the weight coefficient holding unit 111. The control unit 120 adds a redundant variable to a state variable corresponding to the original problem, and sets the redundant variable in the state holding unit 115. The control unit 120 sets a local field of each state variable after the addition of the redundant variable in the local-field holding unit 112.

(S11) The control unit 120 sets the temperature value T to be used in Equation (6) in the determination unit 114. In a case where step S11 is executed for a first time, the control unit 120 sets an initial temperature value to the temperature value T. In a case where step S11 is executed for a second time or later, the control unit 120 sets the temperature value T to a value lower than the previous value.

(S12) The control unit 120 causes the search unit 110 to operate based on 2W1H, and to perform a solution search. During the operation in 2W1H, the control unit 120 executes steps S13 and S18. At this time, the control unit 120 fixes a value of the redundant variable to 1, by maintaining a bias of a state variable corresponding to a redundant element, for example, the redundant variable of which the value is to be fixed to 1, to a relatively large positive value. The operation mode of the search unit 110 in step S12 is a normal mode.

(S13) The control unit 120 determines whether or not a local solution is reached in the solution search in 2W1H by the search unit 110. In a case where the local solution is reached, the process proceeds to step S14. In a case where the local solution is not reached, the process proceeds to step S12. For example, in a case where all states of a next transition destination candidate are rejected by the determination unit 114, the control unit 120 determines that the local solution is reached. The case where all the states of the next transition destination candidate are rejected is a case where all energy change amounts corresponding to the next transition destination candidate are positive and the determination criterion of Equation (5) or Equation (6) is not satisfied.

(S14) The control unit 120 sets the search unit 110 to decrease the bias of the redundant variable of which the value is fixed to 1, to a relatively small value.

(S15) The control unit 120 causes the search unit 110 to operate based on 2W1H, and to perform a state transition. The operation mode of the search unit 110 in step S15 is a local solution escape mode.

(S16) The control unit 120 determines whether or not a predetermined condition is satisfied in the solution search in step S15. In a case where the predetermined condition is satisfied, the process proceeds to step S17. In a case where the predetermined condition is not satisfied, the process returns to step S15, and the solution search in step S15 is continued. For example, the predetermined condition may be that a predetermined time elapses since immediately after the decrease in the bias in step S14, or that a state transition occurs a predetermined number of times in the search unit 110 since immediately after the decrease in the bias in step S14.

(S17) The control unit 120 performs a setting of increasing the bias of the redundant variable of which the value is to be fixed to 1, to the original relatively large value, for the search unit 110. The process proceeds to step S12.

(S18) The control unit 120 determines whether or not the variable $x_j$ of a change candidate is selected a defined number of times in the solution search in 2W1H in step S12. In a case where the variable $x_j$ of the change candidate is selected the defined number of times, the process proceeds to step S19. In a case where the variable $x_j$ of the change candidate is not selected the defined number of times, the process proceeds to step S12. As described above, the four state variables $x_i$, $x_j$, $x_k$, and $x_l$ of the change candidates are specified, in accordance with the selection of the change candidate $x_j$.

(S19) The control unit 120 determines whether or not the temperature value T is decreased a defined number of times. In a case where the temperature value T is decreased the defined number of times, the process proceeds to step S20. In a case where the temperature value T is not decreased the defined number of times, the process proceeds to step S11.

(S20) The control unit 120 generates and outputs a solution to the original problem, by removing the redundant variable from the lowest energy state obtained so far, and ends the process. A final solution is selected among the states obtained by the solution search in the normal mode in which the redundant variable is fixed to 1.

In this manner, in a case where a local solution is reached in a solution search in 2W1H in which a value of a redundant variable is fixed to 1, the information processing apparatus 100 may transition to more various states by non-fixing the value of the redundant variable, and may efficiently escape from the local solution. Accordingly, the information processing apparatus 100 may search for a more appropriate solution, and improve solution-searching performance.

Steps S18 and S19 may be considered to be the processes executed in step S12. During the execution of step S12, the determination of step S13 is executed.

Although an example in which the SA method is executed in the procedure illustrated in FIG. 8 is described, the information processing apparatus 100 may execute the replica exchange method. In this case, the setting of the temperature value in step S10 may be performed by exchanging temperature values between replicas. For example, the determination in step S19 may be made based on whether or not the exchange of the temperature values is performed a defined number of times.

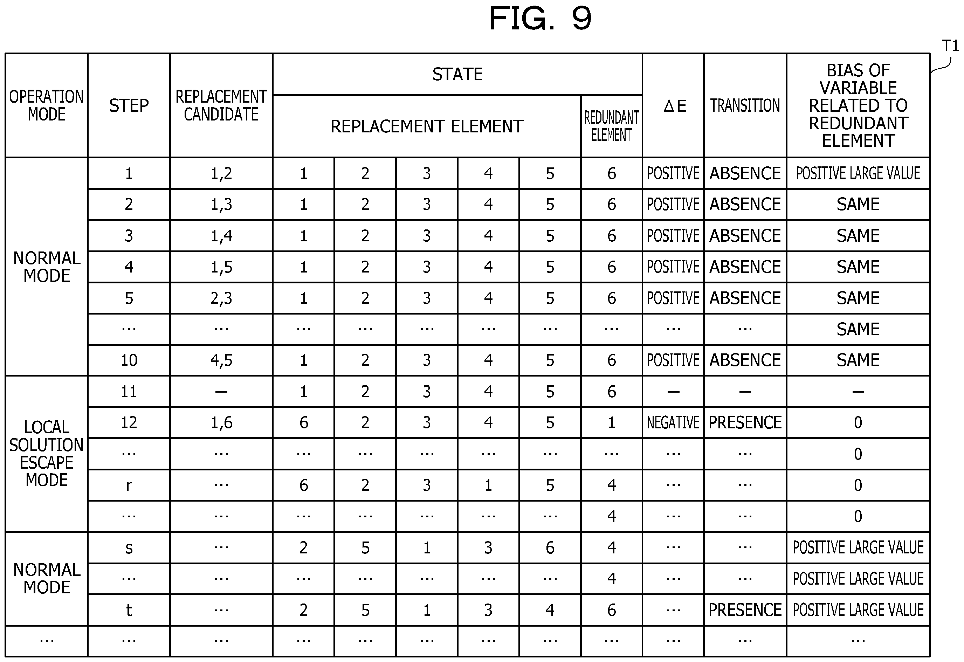

FIG. 9 is a diagram illustrating an example of switching between operation modes using a redundant element.

A table T1 indicates an example of switching between a normal mode and a local solution escape mode in the search unit 110 and the control unit 120. In the example of the table T1, an initial state is represented by a permutation (1, 2, 3, 4, 5, 6). In the permutation, an element "6" is a redundant element. According to the description with reference to FIG. 9, a state transition is represented by replacement of elements in a permutation.

The table T1 includes items of an operation mode, a step, a replacement candidate, a state, $\Delta E$, a transition,

and a bias of a variable related to a redundant element. Any one of the normal mode and the local solution escape mode is described in the item of the operation mode. A step count corresponding to the number of trials of the state transition is described in the item of the step. A pair of elements of trial targets for replacement in the permutation is described in the item of the replacement candidate. A state in the corresponding step count is described in the item of the state. The item of the state is subdivided into items of a replacement element and a redundant element. Elements that may be selected as replacement candidates in the permutation are described in the item of the replacement element. A position at which a redundant element "6" is initially disposed in the permutation, for example, an element disposed in a redundant frame is described in the item of the redundant element. A sign of $\Delta E$ is described in the item of $\Delta E$. Whether or not a transition for replacing replacement candidates occurs from a state at the corresponding step count is described in the item of the transition. A value of a bias of a redundant variable corresponding to the redundant element "6" is described in the item of the bias of the variable related to the redundant element.

For example, the steps "1" to "10" are operations in the normal mode. At the steps "1" to "10", a large positive value is set for the bias of the redundant variable corresponding to the redundant element "6", and the redundant element "6" may not be moved to another position. It is assumed that, in the steps "1" to "10", $\Delta E$ is all positive for each replacement candidate, and a state transition does not occur. In this case, in the step "11", the control unit 120 determines that a local solution is reached in a solution search of the search unit 110, and causes the search unit 110 to transition to the local solution escape mode. For example, the control unit 120 sets the bias of the redundant variable corresponding to the redundant element "6" to, for example, 0.

At the step "12", since $\Delta E$ becomes negative for replacement candidates (1, 6), the search unit 110 performs a transition for replacing the replacement candidates (1, 6). Therefore, an element "1" is moved to the redundant frame, and the redundant element "6" is moved to a position of the element "1".

Even after the step "12", the search unit 110 continues the operation in the local solution escape mode. After a while, in the step "r", an element "4" having the largest cost contribution is output to the redundant frame. After that, in the local solution escape mode, a state transition with 2W1H is substantially performed in five elements excluding the element "4".

After that, in the step "s", when a predetermined condition is satisfied in the local solution escape mode, the control unit 120 sets the bias of the redundant variable changed at a time of the transition to the local solution escape mode to a relatively large positive value again. Therefore, the search unit 110 transitions to the normal mode. After that, in the step "t", the redundant element "6" is moved to the original redundant frame, and in the subsequent normal mode, the redundant element "6" is fixed to the position of the original redundant frame.

Accordingly, in a case where a local solution is reached in the solution search in the normal mode of the search unit 110, the control unit 120 switches the normal mode of the search unit 110 to the local solution escape mode, and then returns to the normal mode again, so that the search unit 110 may escape from the local solution and continue the solution search. Therefore, the information processing apparatus 100 may increase a possibility of finding a more appropriate solution, and improve solution-searching performance.

All of the search unit 110 operates in the normal 2W1H mechanism except for the introduction of the redundant element and the dynamic change of the bias. By going into and out of the local solution escape mode, it is possible to equivalently achieve a multi-bit transition, which may not be performed with the existing 2W1H mechanism, for example, an operation of simultaneously transitioning a number of state variables more than 4.

[Third Embodiment]

Next, a third embodiment will be described. Items different from the above-described second embodiment will be mainly discussed below while omitting explanations of the common items.

With the second embodiment, the information processing apparatus 100 controls fixing and non-fixing of a value of a redundant variable by changing a value of a bias.

With the third embodiment, the information processing apparatus 100 assigns a flag to each state variable instead of changing the value of the bias, and controls fixing and non-fixing of the value of the redundant variable based on the flag.

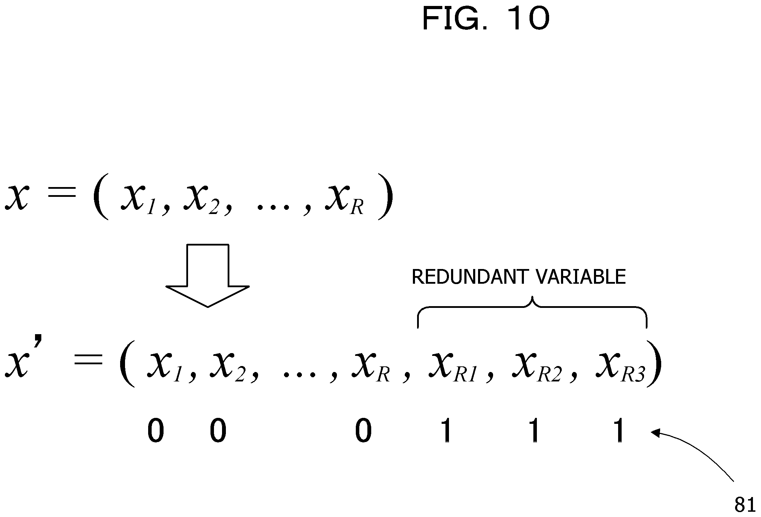

FIG. 10 is a diagram illustrating an example of a redundant variable flag according to the third embodiment.

For example, in a case where redundant variables $x_{R1}$, $x_{R2}$, and $x_{R3}$ are added to the original state vector x = $(x_1, x_2, ..., x_R)$ and a state vector x' = $(x_1, x_2, ..., x_R, x_{R1}, x_{R2}, x_{R3})$ is set, a redundant variable flag 81 is given to each element of the state vector x'. For example, the redundant variable flag 81 may be set to "1" in a case where the corresponding state variable is a redundant variable. On the other hand, "0" is set in the redundant variable flag 81 in a case where the corresponding state variable is not a redundant variable.

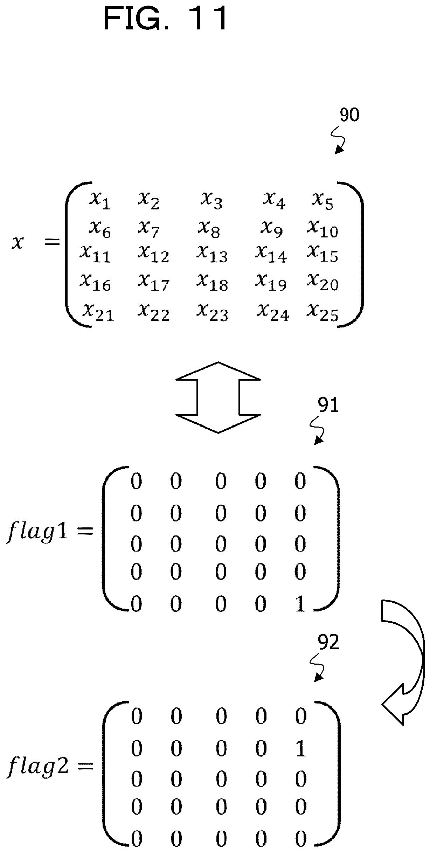

FIG. 11 is a diagram illustrating a change example of a redundant variable flag.

As an example, a case where one redundant element "5" is added to a permutation (1, 2, 3, 4) having four elements is described. At an initial state, the redundant element "5" is added to an end of the permutation. For example, the permutation (1, 2, 3, 4) is extended to a permutation (1, 2, 3, 4, 5). At this time, the permutation is formulated such that no difference in energy occurs between the two. For example, in a case of a QAP, in the expansion as illustrated in FIG. 6, the difference in energy does not occur.

Regarding a state variable, redundant variables ($x_{17}$, $x_{18}$, ..., and $x_{25}$) are added to original state variables ($x_1$, $x_2$, ..., and $x_{16}$).

A state 90 is represented by a matrix of 5 rows and 5 columns by 25 state variables. In the state 90, a first row is $x_1$ to $x_5$, a second row is $x_6$ to $x_{10}$, a third row is $x_{11}$ to $x_{15}$, a fourth row is $x_{16}$ to $x_{20}$, and a fifth row is $x_{21}$ to $x_{25}$.

At this time, a value of a redundant variable flag is given so as to know where the redundant element "5" is in the permutation. After a solution search by the search unit 110 is started, for a while, a transition of moving only two elements in (1, 2, 3, 4) is performed. Accordingly, an obtainable state is a state in which the redundant element "5" is at an end at all times, such as (*, *, *, *, *, 5). The asterisk symbol "*" indicates an element other than "5". Redundant variable flag information 91 (= flag 1) indicates a value of a redundant variable flag of each state variable at this time.

When the search unit 110 detects that a local solution is reached, the control unit 120 causes the search unit 110 to transition to a local solution escape mode, and allows a change in a value of the redundant variable. Regarding a permutation, this means that the redundant element "5" may be moved to any position in the permutation. For example, in a case of the permutation (2, 3, 4, 1, 5), the control unit 120 allows the redundant element "5" to move and causes the search unit 110 to perform a transition for a while. Accordingly, the redundant element "5" is moved, for example, to a state of the permutation (3, 5, 2, 1, 4). Redundant variable flag information 92 (= flag2) indicates the value of the redundant variable flag of each state variable at this time.

For example, when it is determined that the state is moved to a state sufficiently separated from the above-described local solution, such as when an operation in the local solution escape mode is performed for a predetermined period or when a state transition in the local solution escape mode is performed a predetermined number of times, the control unit 120 moves the redundant element "5" to the end of the permutation. This operation corresponds to an operation of replacing the redundant element "5" with the element "4", in the example of the permutation (3, 5, 2, 1, 4). Even in a case where this operation increases the energy, the control unit 120 forcibly performs the operation. For example, this is because, in a case where the QAP is extended as illustrated in FIG. 6, the redundant element "5" may not be returned to an initial position unless the operation is forcibly performed since the energy of the permutation (3, 4, 2, 1, 5) is necessarily larger than the energy of the permutation (3, 5, 2, 1, 4).

The permutation after the redundant element "5" is returned corresponds to (3, 4, 2, 1). The permutation (3, 4, 2, 1) is a permutation that is relatively far away from the permutation (2, 3, 4, 1) immediately before the transition to the local solution escape mode.

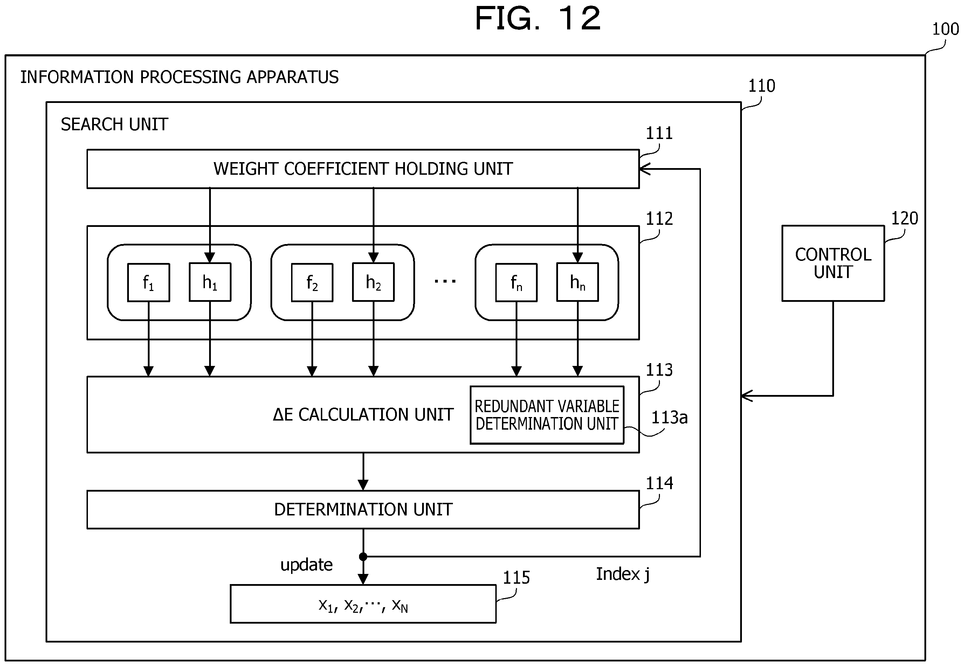

FIG. 12 is a diagram illustrating a functional example of the information processing apparatus.

The third embodiment is different from the second embodiment in that the local-field holding unit 112 holds the local fields $h_1$, $h_2$, ..., and $h_n$ and redundant variable flags $f_1$, $f_2$, ..., and $f_n$. Another difference from the second embodiment is that the $\Delta E$ calculation unit 113 includes a redundant variable determination unit 113a. Based on the redundant variable flags $f_1$, $f_2$, ..., and $f_n$, the redundant variable determination unit 113a determines whether or not a state variable corresponding to each index corresponds to a redundant variable. Values of the redundant variable flags $f_1$, $f_2$, ..., and $f_n$ are fixed such that a value for a redundant variable of which a value is to be fixed to 1 in a normal mode is 1 and the other values are 0. The values of the redundant variable flags $f_1$, $f_2$, ..., and $f_n$ are updated such that the value for the state variable corresponding to the redundant element is 1 and the other values are 0 in accordance with a state transition in a local solution escape mode. The updating of the values of the redundant variable flags $f_1$, $f_2$, ..., and $f_n$ may be performed by the local-field holding unit 112 or the determination unit 114.

For example, by outputting $\Delta E$ in a case where a value of a redundant variable for which the redundant variable flag is determined to be 1 by the redundant variable determination unit 113a is changed from 1 to 0, as a relatively large value, for example, a maximum value which is settable, the $\Delta E$ calculation unit 113 may fix the value of the redundant variable to 1. In a case where the value of the redundant variable is not fixed to 1, the $\Delta E$ calculation unit 113 may calculate $\Delta E$ in a case where the value of each state variable is changed according to 2W1H as usual, based on Equation (8), regardless of the value of the redundant variable flag.

Next, a process procedure for executing an SA method by the information processing apparatus 100 according to the third embodiment will be described.

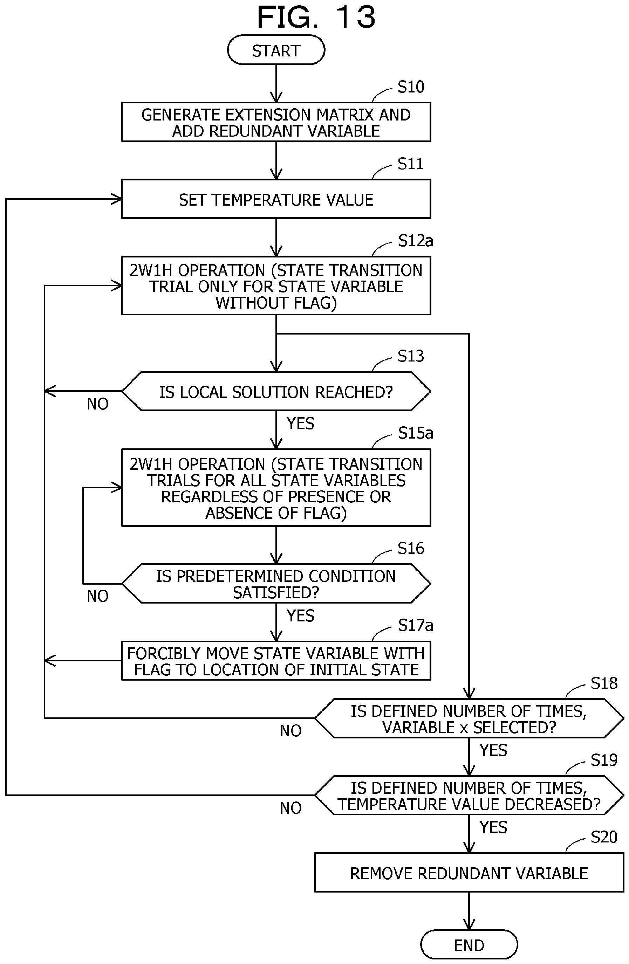

FIG. 13 is a flowchart illustrating a process example of the information processing apparatus.

The third embodiment is different from the second embodiment in that the information processing apparatus 100 executes each of steps S12a, S15a, and S17a, instead of steps S12, S15, and S17 illustrated in FIG. 8. Therefore, in the following explanation, steps S12a, S15a, and S17a are mainly described, and description of the other steps will be omitted.

(S12a) The control unit 120 causes the search unit 110 to operate based on 2W1H, and to perform a solution search. During the operation in 2W1H, the control unit 120 executes steps S13 and S18. At this time, the search unit 110 maintains a redundant variable flag of a redundant variable of which a value is to be fixed to 1 at 1, and performs a state transition trial only for a state variable with no flag, for example, the redundant variable flag = 0. An operation mode of the search unit 110 in step S12a is a normal mode.

In a case of YES in step S13, the process proceeds to step S15a. In a case of NO in step S13, the process proceeds to step S12a.

(S15a) The control unit 120 causes the search unit 110 to operate based on 2W1H and to perform a solution search so as to perform the state transition trial for all the state variables, regardless of the presence or absence of the redundant variable flag, for example, a value of the redundant variable flag. According to the state transition, the search unit 110 updates the redundant variable flag such that the redundant variable flag of the redundant variable corresponding to the redundant element is 1, and the redundant variable flags of the other redundant variables are 0. The operation mode of the search unit 110 in step S15a is a local solution escape mode. The process proceeds to step S16.

For example, the predetermined condition in step S16 may be that a predetermined time elapses since immediately after the start of the operation in step S15a, or a state transition occurs a predetermined number of times in the search unit 110.

(S17a) The control unit 120 forcibly moves a state variable having a flag to a location of an initial state. For example, the control unit 120 forcibly returns the value of the redundant variable having an initial value of 1 to 1 such that the redundant element is disposed at the initial position immediately before step S15a, and sets the redundant variable flag such that the redundant variable is 1 and the others are 0. According to the update of the value of the redundant variable, the search unit 110 also updates a local field. The process proceeds to step S12a.

In this manner, in a case where a local solution is reached in a solution search in 2W1H in which a value of a redundant variable is fixed to 1, the information processing apparatus 100 may transition to more various states by non-fixing the value of the redundant variable, and may efficiently escape from the local solution. Accordingly, the information processing apparatus 100 may search for a more appropriate solution, and improve solution-searching performance.

Steps S18 and S19 may be considered to be the processes executed in step S12a. During the execution of step S12a, the determination of step S13 is executed.

Meanwhile, the information processing apparatus 100 may also set the number of redundant variables of which values are to be fixed to 1 in the normal mode variable. Therefore, a procedure for controlling the number of redundant variables by the information processing apparatus 100 will be described.

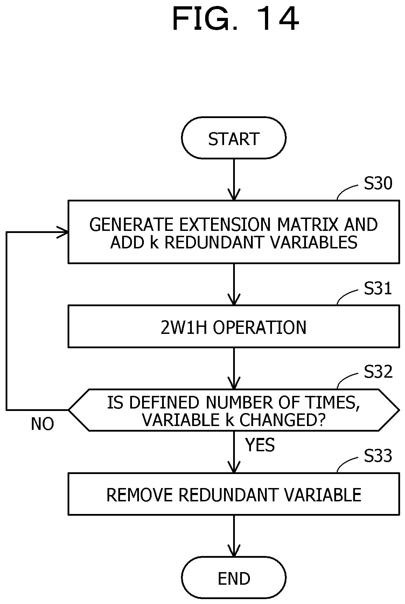

FIG. 14 is a flowchart illustrating an operation example of controlling the number of redundant variables.

For example, in a local solution escape mode corresponding to step S15a, the information processing apparatus 100 may control the number of redundant variables by the following procedure.

(S30) The control unit 120 generates an extension matrix in accordance with input original problem information, and adds k redundant variables. The extension matrix is generated in accordance with the number of redundant variables of which values are to be fixed to 1. For example, in a case where a redundant variable is added such that two redundant elements are added to an end of a permutation, two rows and two columns having values of 0 are added to ends of rows and columns of the original flow matrix F and the distance matrix D in a QAP. For example, the control unit 120 sets the number of redundant variables to be added at first to 0, and then increases a value of k every time step S30 is executed.

(S31) The control unit 120 causes the search unit 110 to operate based on 2W1H and to perform a solution search so as to perform a state transition trial for all state variables, regardless of the presence or absence of a redundant variable flag, for example, a value of the redundant variable flag. According to the state transition, the search unit 110 updates the redundant variable flag such that the redundant variable flag of the redundant variable corresponding to the redundant element is 1, and the redundant variable flags of the other redundant variables are 0. The operation of the search unit 110 in step S31 is performed, for example, for a certain time.

(S32) The control unit 120 determines whether or not the variable k is changed by a defined number of times. In a case where the variable k is changed the defined number of times, the process proceeds to step S33. In a case where the variable k is not changed the defined number of times, the process proceeds to step S30.

(S33) The control unit 120 forcibly returns the value of the added redundant variable to 1 with the initial value set to 1, removes the redundant variable added in step S30, and ends the process. After the present process is ended, the process proceeds to, for example, step S12a.

Alternatively, the control unit 120 may acquire the lowest energy obtained by executing step S31 for a certain time, and select whether to increase or decrease k in step S32 depending on whether or not the lowest energy is improved from the lowest energy obtained so far.

For example, it is assumed that the lowest energy obtained when step S31 is first executed with k = 0 is set to $E(0)$. Next, the lowest energy obtained when step S31 is executed by increasing the redundant variables by k for the first time is set to $E(1)$. In a case of $E(1) < E(0)$ in step S32, for example, improvement, the control unit 120 further increases k in the second and subsequent times, and additionally tries k redundant variables. At a stage in which $E(n+1) > E(n)$ is satisfied in step S32, the control unit 120 may proceed to step S33.

In this manner, the control unit 120 may introduce a plurality of the redundant variables, as variables of a redundant element to be introduced.

In a case where a plurality of redundant elements are introduced, the search unit 110 may suppress a transition by replacement of the redundant elements in the local solution escape mode. Therefore, a procedure for suppressing a transition by replacement of redundant elements by the search unit 110 will be described.

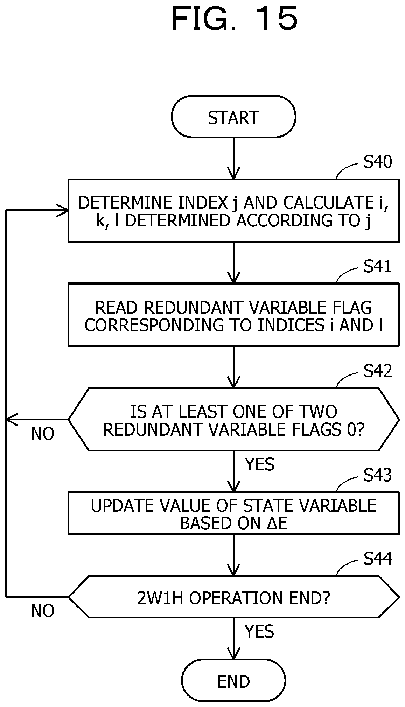

FIG. 15 is a flowchart illustrating an operation example of suppressing a transition by replacement of redundant elements. The following process is executed in, for example, step S15a.

(S40) The $\Delta E$ calculation unit 113 determines an index j of a state variable $x_j$ having a current value of 0. The index j may be randomly selected or sequentially selected. From the index j, the $\Delta E$ calculation unit 113 calculates indices i, k, and l of three other state variables to be flipped. $x_i = 1$ and $x_l = 1$.

(S41) The redundant variable determination unit 113a reads redundant variable flags $f_i$ and $f_l$ corresponding to the indices i and l.

(S42) The redundant variable determination unit 113a determines whether or not at least one of the two redundant variable flags $f_i$ and $f_l$ is 0. In a case where at least one of the two redundant variable flags $f_i$ and $f_l$ is 0, the process proceeds to step S43. In a case where neither of the two redundant variable flags $f_i$ and $f_l$ is 0, for example, in a case where both are 1, the process proceeds to step S40. In this manner, in a case where both of the state variables $x_i$ and $x_l$ are redundant variables, the index j is selected again.

(S43) The $\Delta E$ calculation unit 113 calculates $\Delta E$ based on Equation (8), and supplies $\Delta E$ to the determination unit 114. With determination of Equation (6) based on $\Delta E$, the determination unit 114 determines whether or not to allow an update of values of the four state variables $x_i$, $x_j$, $x_k$, and $x_l$, and in a case where the update is allowed, the determination unit 114 updates the values of the state variables $x_i$, $x_j$, $x_k$, and $x_l$ in the state holding unit 115. The determination unit 114 outputs the index j to the weight coefficient holding unit 111, and supplies the weight coefficients ($W_{mi}$, $W_{mj}$, $W_{mk}$, and $W_{ml}$) to the local-field holding unit 112. Based on Equation (9), the local-field holding unit 112 updates each local field.

(S44) The $\Delta E$ calculation unit 113 determines whether or not to end the operation of 2W1H in the local solution escape mode under the control of the control unit 120. In a case where the operation of 2W1H is to be ended, the process is ended. In a case where the operation of 2W1H is continued, the process proceeds to step S40. The end of the local solution escape mode is controlled by the control unit 120, based on the determination in above-described step S16.

A state transition by replacement of the redundant elements is a meaningless transition without movement of elements other than the redundant elements, and an unnecessary process. Therefore, by suppressing the transition by the replacement between the redundant elements as described above, the search unit 110 may suppress the occurrence of the meaningless transition, and speed up solution-searching.

As described above, the search unit 110 executes a first process of fixing a value of a state variable of a K-th row (K is a natural number equal to or less than N) and an L-th column (L is a natural number equal to or less than N) when $N^2$ state variables are arranged in N rows and N columns to 1 and repeatedly performing a state transition to satisfy a 2W1H constraint. The search unit 110 executes a second process of non-fixing the value of the state variable in the K-th row and the L-th column when the $N^2$ state variables are arranged in N rows and N columns and repeatedly performing a state transition to satisfy the 2W1H constraint. During a search for a solution by the search unit 110, the control unit 120 switches between the first process and the second process, and executes the first process and the second process.

Therefore, the information processing apparatus 100 may improve solution-searching performance. The functions of the search unit 110 or the control unit 120 of the information processing apparatus 100 are implemented by the FPGA 109, a GPU, or the like, for example. For example, the above-described functions of the information processing apparatus 100 may be implemented by the RAM 102 executing a program stored in the CPU 101. A coprocessor or a processor including an arithmetic circuit for the FPGA 109, the GPU, the CPU 101, or the like is an example of the processing unit 12 according to the first embodiment.

In a case where a minimum value of a value of an energy function is not updated in the first process, the control unit 120 may switch to the second process, and may switch to the first process after executing the second process. Therefore, in a case where the progress of the search in the first process may not be expected, the information processing apparatus 100 may promote the state transition by the second process, and may increase a possibility that a more appropriate solution may be obtained in the first process. For example, in a case where a local solution is reached in the first process, the control unit 120 may switch to the second process with the local solution as a starting point, and may switch to the first process after executing the second process. Therefore, the information processing apparatus 100 may escape from the local solution by the second process and continue the first process, and the solution-searching performance may be improved.

For example, after switching from the first process to the second process, the control unit 120 executes the second process for a predetermined time, or performs a change of values of four state variables by the second process a predetermined number of times, and then switches to the first process. Therefore, the information processing apparatus 100 may restart the first process in a state of being separated from the local solution to some extent, and may search for more various solutions.

The control unit 120 performs switching between the first process and the second process, by controlling a bias for the change amount of the value of the energy function, corresponding to the state variable of the K-th row and the L-th column when the $N^2$ state variables are arranged in N rows and N columns. Therefore, the information processing apparatus 100 may easily perform switching between the first process and the second process by using an existing mechanism. For example, the bias is $b_i$ in Equation (1) or (3).

Alternatively, the control unit 120 performs switching between the first process and the second process, by controlling a flag corresponding to the state variable of the K-th row and the L-th column when the $N^2$ state variables are arranged in N rows and N columns. Therefore, the information processing apparatus 100 may perform switching between the first process and the second process with a simple mechanism. The redundant variable flag is an example of the flag.

The control unit 120 may make the number of state variables of which values are to be fixed to 1 in the first process and of which the values are non-fixed in the second process variable. Therefore, the number of redundant variables may be appropriately set in accordance with the problem or an execution status of the second process, and efficiency of the second process may be improved.

In a permutation of a plurality of elements indicated by the values of the $N^2$ state variables arranged in N rows and N columns, the search unit 110 may set, for each of the $N^2$ state variables, a flag for identifying a position in the permutation of each of a plurality of redundant elements inserted in the permutation by adding a plurality of state variables of which the values are fixed to 1 in the first process and of which the values are non-fixed in the second process. In the second process, based on the flag corresponding to each of the $N^2$ state variables, the search unit 110 omits a process for the change in the values of the four state variables corresponding to replacement of the two redundant elements in the permutation. Therefore, the information processing apparatus 100 may suppress a state transition trial corresponding to the replacement of the redundant elements with each other, and may improve efficiency of the second process. The redundant variable flag is an example of the above-described flag.

For example, the control unit 120 may acquire input problem information. The problem information includes a problem matrix of M rows and M columns (M is an integer equal to or more than 3 and less than N). For example, the above-described flow matrix or distance matrix is an example of the problem matrix. As a new row to be the K-th row and a new column to be the L-th column when the problem matrix is converted into N rows and N columns, the control unit 120 may convert the problem matrix into N rows and N columns by inserting rows and columns in which all elements are 0. Based on the problem matrix converted into N rows and N columns, the control unit 120 may generate a weight coefficient matrix included in the energy function. Accordingly, the control unit 120 may introduce a state variable of the K-th row and the L-th column among the $N^2$ state variables arranged in N rows and N columns into the energy function, as a redundant variable of which a value is fixed to 1 in a

normal mode and of which the value is non-fixed in a local solution escape mode.

The above-described functions of the information processing apparatus 100 may be applied to a permutation optimization problem such as QAP, TSP, VRP and LOP.

The information processing according to the first embodiment may be achieved by causing the processing unit 12 to execute a program. The information processing of the second embodiment may be realized by causing the CPU 101 to execute a program. The program may be recorded in the computer-readable recording medium 53.

For example, the program may be distributed by distributing the recording medium 53 in which the program is recorded. The program may be stored in another computer and the program may be distributed via a network. For example, a computer may store (install) the program recorded in the recording medium 53 or the program received from the another computer in a storage device such as the RAM 102 or the HDD 103, read the program from the storage device, and execute the program.

**Claims**

1. An information processing apparatus comprising:

   a storage unit that stores $N^2$ state variables (N is an integer equal to or more than 4) included in an energy function of an Ising model, values of the $N^2$ state variables being determined based on a constraint that the $N^2$ state variables are arranged in N rows and N columns, a sum of values of state variables included in each row is 1 and a sum of values of state variables included in each column is 1; and
   a processing unit that searches for a solution to a permutation optimization problem represented by the energy function by executing a first process and a second process,
   wherein the first process includes:

   fixing a value of a state variable of a K-th row (K is a natural number equal to or less than N) and an L-th column (L is a natural number equal to or less than N) in N rows and N columns to 1; and
repeating changing values of four state variables of the $N^2$ state variables in accordance with a first change amount of a value of the energy function when the values of the four state variables are changed to satisfy the constraint, and

wherein the second process includes:

non-fixing the value of the state variable of the K-th row and the L-th column; and
repeating changing the values of the four state variables of the $N^2$ state variables in accordance with a second change amount of the value of the energy function when the values of the four state variables are changed to satisfy the constraint.

2. The information processing apparatus according to claim 1, wherein the processing unit is further configured to:

execute the second process when a minimum value of the value of the energy function is not updated in the first process, and
execute the first process after the second process is executed.

3. The information processing apparatus according to claim 2, wherein the processing unit is further configured to execute the first process after the values of the four state variables are changed a certain number of times by the second process.

4. The information processing apparatus according to claim 1, wherein the processing unit is further configured to switch between the first process and the second process by controlling a bias with respect to a change amount of the value of the energy function, which corresponds to the state variable of the K-th row and the L-th column.

5. The information processing apparatus according to claim 1, wherein the processing unit is further configured to switch between the first process and the second process by controlling a flag which corresponds to the state variable of the K-th row and the L-th column.

6. The information processing apparatus according to claim 1, wherein the processing unit is further configured to change a number of the state variables of which the values are fixed to 1 in the first process and of which the values are non-fixed in the second process.

7. The information processing apparatus according to claim 1, wherein the processing unit is further configured to:

set, in a permutation of a plurality of elements indicated by the values of the $N^2$ state variables arranged in N rows and N columns, a flag for identifying a position in the permutation of each of a plurality of redundant elements inserted in the permutation by adding a plurality of state variables of which values are fixed to 1 in the first process and of which the values are non-fixed in the second process, for each of the $N^2$ state variables, and
omit, in the second process, based on the flag which corresponds to each of the $N^2$ state variables, the process of changing the values of the four state variables which correspond to replacement of two redundant elements in the permutation.

8. The information processing apparatus according to claim 1, wherein for a problem matrix of M rows and M columns (M is an integer equal to or more than 3 and less than N) included in input problem information, the processing unit is further configured to:

convert the problem matrix into N rows and N columns, by inserting rows and columns into N rows and N columns as a new row to be a K-th row and a new column to be an L-th column, all elements in the rows and the columns being 0, and
generate a weight coefficient matrix included in the energy function based on the problem matrix converted into the N rows and the N columns.

9. An information processing method for a computer to execute a process comprising:

storing $N^2$ state variables (N is an integer equal to or more than 4) included in an energy function of an Ising model, values of the $N^2$ state variables being determined based on a constraint that the $N^2$ state variables are

arranged in N rows and N columns, a sum of values of state variables included in each row is 1 and a sum of values of state variables included in each column is 1; and

searching for a solution to a permutation optimization problem represented by the energy function by executing a first process and a second process,

wherein the first process includes:

fixing a value of a state variable of a K-th row (K is a natural number equal to or less than N) and an L-th column (L is a natural number equal to or less than N) in N rows and N columns to 1; and

repeating changing values of four state variables of the $N^2$ state variables in accordance with a first change amount of a value of the energy function when the values of the four state variables are changed to satisfy the constraint, and

wherein the second process includes:

non-fixing the value of the state variable of the K-th row and the L-th column; and

repeating changing the values of the four state variables of the $N^2$ state variables in accordance with a second change amount of the value of the energy function when the values of the four state variables are changed to satisfy the constraint.

10. The information processing method according to claim 9, wherein the process further comprising:

executing the second process when a minimum value of the value of the energy function is not updated in the first process; and

executing the first process after the second process is executed.

11. The information processing method according to claim 10, wherein the process further comprising executing the first process after the values of the four state variables are changed a certain number of times by the second process.

12. An information processing program that causes at least one computer to execute a process, the process comprising:

storing $N^2$ state variables (N is an integer equal to or more than 4) included in an energy function of an Ising model, values of the $N^2$ state variables being determined based on a constraint that the $N^2$ state variables are arranged in N rows and N columns, a sum of values of state variables included in each row is 1 and a sum of values of state variables included in each column is 1; and

searching for a solution to a permutation optimization problem represented by the energy function by executing a first process and a second process,

wherein the first process includes:

fixing a value of a state variable of a K-th row (K is a natural number equal to or less than N) and an L-th column (L is a natural number equal to or less than N) in N rows and N columns to 1; and

repeating changing values of four state variables of the $N^2$ state variables in accordance with a first change amount of a value of the energy function when the values of the four state variables are changed to satisfy the constraint, and

wherein the second process includes:

non-fixing the value of the state variable of the K-th row and the L-th column; and

repeating changing the values of the four state variables of the $N^2$ state variables in accordance with a second change amount of the value of the energy function when the values of the four state variables are changed to satisfy the constraint.

13. The information processing program according to claim 12, wherein the process further comprising:

executing the second process when a minimum value of the value of the energy function is not updated in the first process; and

executing the first process after the second process is executed.

**14.** The information processing program according to claim 13, wherein the process further comprising executing the first process after the values of the four state variables are changed a certain number of times by the second process.

# FIG. 1

|       |       |       |       |       |
|-------|-------|-------|-------|-------|
| 1 | 0 | 0 | 0 | 0 |
| 0 | 1 | 0 | 0 | 0 |
| 0 | 0 | 1 | 0 | 0 |
| 0 | 0 | 0 | 1 | 0 |
| 0 | 0 | 0 | 0 | 1 |

(1,2,3,4,5)

|       |       |       |       |       |       |
|-------|-------|-------|-------|-------|-------|
| 1 | 0 | 0 | 0 | 0 | 0 |
| 0 | 1 | 0 | 0 | 0 | 0 |
| 0 | 0 | 1 | 0 | 0 | 0 |
| 0 | 0 | 0 | 1 | 0 | 0 |
| 0 | 0 | 0 | 0 | 1 | 0 |
| 0 | 0 | 0 | 0 | 0 | 1 |

(1,2,3,4,5,6)

20  21

10

INFORMATION PROCESSING APPARATUS

11

STORAGE UNIT

12

PROCESSING UNIT

30

| STEP COUNT | REPLACEMENT CANDIDATE | STATE | | | | | |
|-----------|----------------------|---|---|---|---|---|---|
| … | … | … | … | … | … | … | 6 |
| $\alpha+1$ | 1,2 | 1 | 2 | 3 | 4 | 5 | 6 |
| $\alpha+2$ | 1,3 | 1 | 2 | 3 | 4 | 5 | 6 |
| $\alpha+3$ | 1,4 | 1 | 2 | 3 | 4 | 5 | 6 |
| $\alpha+4$ | 1,5 | 1 | 2 | 3 | 4 | 5 | 6 |
| $\alpha+5$ | 2,3 | 1 | 2 | 3 | 4 | 5 | 6 |
| … | … | 1 | 2 | 3 | 4 | 5 | 6 |
| $\alpha+10$ | 4,5 | 1 | 2 | 3 | 4 | 5 | 6 |
| $\alpha+11$ | — | 1 | 2 | 3 | 4 | 5 | 6 |
| $\alpha+12$ | 1,6 | 6 | 2 | 3 | 4 | 5 | 1 |
| … | … | … | … | … | … | … | … |
| $\beta$ | … | 6 | 1 | 2 | 3 | 5 | 4 |
| … | … | … | … | … | … | … | 4 |
| $\gamma$ | … | 6 | 2 | 3 | 1 | 5 | 4 |
| … | … | … | … | … | … | … | 4 |
| $\delta$ | … | 2 | 5 | 1 | 3 | 4 | 6 |
| … | … | … | … | … | … | … | 6 |

FIX REDUNDANT ELEMENT "6"

CANCEL FIXING

FIX REDUNDANT ELEMENT "6"

# FIG. 2

INFORMATION PROCESSING APPARATUS 100

| | |
|---|---|
| CPU 101 | GPU 104 |
| RAM 102 | INPUT INTERFACE 105 |
| HDD 103 | MEDIUM READER 106 |
| | NIC 107 |

51

52

53

54 NETWORK

ACCELERATOR CARD 108

FPGA

MEMORY 109a

109

# FIG. 3

# FIG. 4A

61

| 1 | 0 | 0 | 0 | 0 |
|---|---|---|---|---|
| 0 | 1 | 0 | 0 | 0 |
| 0 | 0 | 1 | 0 | 0 |
| 0 | 0 | 0 | 1 | 0 |
| 0 | 0 | 0 | 0 | 1 |

(1,2,3,4,5)

# FIG. 4B

62

| 0 | 0 | 0 | 1 | 0 |
|---|---|---|---|---|
| 0 | 1 | 0 | 0 | 0 |
| 0 | 0 | 1 | 0 | 0 |
| 0 | 0 | 0 | 0 | 1 |
| 1 | 0 | 0 | 0 | 0 |

(4,2,3,5,1)

# FIG. 5

100

INFORMATION PROCESSING APPARATUS

110

SEARCH UNIT

111

WEIGHT COEFFICIENT HOLDING UNIT

112

| $h_1$ | $h_2$ | $\cdots$ | $h_n$ |

113

$\Delta E$ CALCULATION UNIT

114

DETERMINATION UNIT

update

Index j

115

$x_1, x_2, \cdots, x_n$

120

CONTROL UNIT

# FIG. 6

**D1 — ORIGINAL PROBLEM**

$$F = \begin{pmatrix} f_{11} & f_{12} & f_{13} & f_{14} \\ f_{21} & f_{22} & f_{23} & f_{24} \\ f_{31} & f_{32} & f_{33} & f_{34} \\ f_{41} & f_{42} & f_{43} & f_{44} \end{pmatrix}$$

$$D = \begin{pmatrix} d_{11} & d_{12} & d_{13} & d_{14} \\ d_{21} & d_{22} & d_{23} & d_{24} \\ d_{31} & d_{32} & d_{33} & d_{34} \\ d_{41} & d_{42} & d_{43} & d_{44} \end{pmatrix}$$

STATE VARIABLE

$$\begin{bmatrix} x_1 \\ \vdots \\ x_{16} \end{bmatrix}$$

**D2 — MATRIX AFTER ADDITION OF REDUNDANT ELEMENT**

$$F' = \begin{pmatrix} f_{11} & f_{12} & f_{13} & f_{14} & 0 \\ f_{21} & f_{22} & f_{23} & f_{24} & 0 \\ f_{31} & f_{32} & f_{33} & f_{34} & 0 \\ f_{41} & f_{42} & f_{43} & f_{44} & 0 \\ 0 & 0 & 0 & 0 & 0 \end{pmatrix}$$

$$D' = \begin{pmatrix} d_{11} & d_{12} & d_{13} & d_{14} & 0 \\ d_{21} & d_{22} & d_{23} & d_{24} & 0 \\ d_{31} & d_{32} & d_{33} & d_{34} & 0 \\ d_{41} & d_{42} & d_{43} & d_{44} & 0 \\ 0 & 0 & 0 & 0 & 0 \end{pmatrix}$$

STATE VARIABLE

$$\begin{bmatrix} x_1 \\ \vdots \\ x_{16} \\ x_{17} \\ \vdots \\ x_{25} \end{bmatrix}$$

EP 4 290 422 A1

# FIG. 7

71

| 1 | 0 | 0 | 0 |
|---|---|---|---|
| 0 | 1 | 0 | 0 |
| 0 | 0 | 1 | 0 |
| 0 | 0 | 0 | 1 |

(1,2,3,4)

72

| 1 | 0 | 0 | 0 | 0 |
|---|---|---|---|---|
| 0 | 1 | 0 | 0 | 0 |
| 0 | 0 | 1 | 0 | 0 |
| 0 | 0 | 0 | 1 | 0 |
| 0 | 0 | 0 | 0 | **1** |

(1,2,3,4,5)

# FIG. 8

START

S10
GENERATE EXTENSION MATRIX AND
ADD REDUNDANT VARIABLE

S11
SET TEMPERATURE VALUE

S12
2W1H OPERATION

S13
IS LOCAL SOLUTION REACHED?

NO

YES

S14
DECREASE BIAS FOR REDUNDANT
VARIABLE

S15
2W1H OPERATION

S16
IS PREDETERMINED CONDITION
SATISFIED?

NO

YES

S17
INCREASE BIAS FOR REDUNDANT
VARIABLE

S18
IS DEFINED NUMBER OF TIMES,
VARIABLE x SELECTED?

NO

YES

S19
IS DEFINED NUMBER OF TIMES,
TEMPERATURE VALUE DECREASED?

NO

YES

S20
REMOVE REDUNDANT VARIABLE

END

# FIG. 9

| OPERATION MODE | STEP | REPLACEMENT CANDIDATE | STATE | | | | | | ΔE | TRANSITION | BIAS OF VARIABLE RELATED TO REDUNDANT ELEMENT |
| | | | REPLACEMENT ELEMENT | | | | | REDUNDANT ELEMENT | | | |
|---|---|---|---|---|---|---|---|---|---|---|---|
| NORMAL MODE | 1 | 1,2 | 1 | 2 | 3 | 4 | 5 | 6 | POSITIVE | ABSENCE | POSITIVE LARGE VALUE |
| | 2 | 1,3 | 1 | 2 | 3 | 4 | 5 | 6 | POSITIVE | ABSENCE | SAME |
| | 3 | 1,4 | 1 | 2 | 3 | 4 | 5 | 6 | POSITIVE | ABSENCE | SAME |
| | 4 | 1,5 | 1 | 2 | 3 | 4 | 5 | 6 | POSITIVE | ABSENCE | SAME |
| | 5 | 2,3 | 1 | 2 | 3 | 4 | 5 | 6 | POSITIVE | ABSENCE | SAME |
| | ... | ... | ... | ... | ... | ... | ... | ... | ... | ... | SAME |
| | 10 | 4,5 | 1 | 2 | 3 | 4 | 5 | 6 | POSITIVE | ABSENCE | SAME |
| LOCAL SOLUTION ESCAPE MODE | 11 | — | 1 | 2 | 3 | 4 | 5 | 6 | — | — | — |
| | 12 | 1,6 | 6 | 2 | 3 | 4 | 5 | 1 | NEGATIVE | PRESENCE | 0 |
| | ... | ... | ... | ... | ... | ... | ... | ... | ... | ... | 0 |
| | r | ... | 6 | 2 | 3 | 1 | 5 | 4 | ... | ... | 0 |
| | ... | ... | ... | ... | ... | ... | ... | 4 | ... | ... | 0 |
| NORMAL MODE | s | ... | 2 | 5 | 1 | 3 | 6 | 4 | ... | ... | POSITIVE LARGE VALUE |
| | ... | ... | ... | ... | ... | ... | ... | 4 | ... | ... | POSITIVE LARGE VALUE |
| | t | ... | 2 | 5 | 1 | 3 | 4 | 6 | ... | PRESENCE | POSITIVE LARGE VALUE |
| | ... | ... | ... | ... | ... | ... | ... | ... | ... | ... | ... |

T1

EP 4 290 422 A1

FIG. 10

EP 4 290 422 A1

$$x = ( x_1, x_2, \ldots, x_R )$$

REDUNDANT VARIABLE

$$x' = ( x_1, x_2, \ldots, x_R, x_{R1}, x_{R2}, x_{R3})$$

$$0 \quad 0 \qquad 0 \quad 1 \quad 1 \quad 1$$

81

# FIG. 11

$$x \; = \begin{pmatrix} x_1 & x_2 & x_3 & x_4 & x_5 \\ x_6 & x_7 & x_8 & x_9 & x_{10} \\ x_{11} & x_{12} & x_{13} & x_{14} & x_{15} \\ x_{16} & x_{17} & x_{18} & x_{19} & x_{20} \\ x_{21} & x_{22} & x_{23} & x_{24} & x_{25} \end{pmatrix}$$

90

91

$$flag1 = \begin{pmatrix} 0 & 0 & 0 & 0 & 0 \\ 0 & 0 & 0 & 0 & 0 \\ 0 & 0 & 0 & 0 & 0 \\ 0 & 0 & 0 & 0 & 0 \\ 0 & 0 & 0 & 0 & 1 \end{pmatrix}$$

92

$$flag2 = \begin{pmatrix} 0 & 0 & 0 & 0 & 0 \\ 0 & 0 & 0 & 0 & 1 \\ 0 & 0 & 0 & 0 & 0 \\ 0 & 0 & 0 & 0 & 0 \\ 0 & 0 & 0 & 0 & 0 \end{pmatrix}$$

# FIG. 12

INFORMATION PROCESSING APPARATUS 100

SEARCH UNIT 110

WEIGHT COEFFICIENT HOLDING UNIT 111

112

$f_1$  $h_1$   $f_2$  $h_2$   $\cdots$   $f_n$  $h_n$

$\Delta E$ CALCULATION UNIT

REDUNDANT VARIABLE DETERMINATION UNIT 113a

113

DETERMINATION UNIT 114

update

Index j

$x_1, x_2, \cdots, x_N$ 115

CONTROL UNIT 120

EP 4 290 422 A1

# FIG. 13

START

GENERATE EXTENSION MATRIX AND ADD REDUNDANT VARIABLE — S10

SET TEMPERATURE VALUE — S11

2W1H OPERATION (STATE TRANSITION TRIAL ONLY FOR STATE VARIABLE WITHOUT FLAG) — S12a

IS LOCAL SOLUTION REACHED? — S13

NO

YES

2W1H OPERATION (STATE TRANSITION TRIALS FOR ALL STATE VARIABLES REGARDLESS OF PRESENCE OR ABSENCE OF FLAG) — S15a

IS PREDETERMINED CONDITION SATISFIED? — S16

NO

YES

FORCIBLY MOVE STATE VARIABLE WITH FLAG TO LOCATION OF INITIAL STATE — S17a

IS DEFINED NUMBER OF TIMES, VARIABLE x SELECTED? — S18

NO

YES

IS DEFINED NUMBER OF TIMES, TEMPERATURE VALUE DECREASED? — S19

NO

YES

REMOVE REDUNDANT VARIABLE — S20

END

# FIG. 14

```
          ┌─────────┐
          │  START  │
          └────┬────┘
               │                    ┌─ S30
               ▼
   ┌──────────────────────────────┐
   │ GENERATE EXTENSION MATRIX AND│
   │ ADD k REDUNDANT VARIABLES    │
   └──────────────┬───────────────┘
                  │                 ┌─ S31
                  ▼
   ┌──────────────────────────────┐
   │       2W1H OPERATION         │
   └──────────────┬───────────────┘
                  │                 ┌─ S32
                  ▼
   ╱──────────────────────────────╲
   ╲ IS DEFINED NUMBER OF TIMES,   ╱
  NO╲ VARIABLE k CHANGED?         ╱
      ╲────────────┬─────────────╱
                   │ YES          ┌─ S33
                   ▼
   ┌──────────────────────────────┐
   │   REMOVE REDUNDANT VARIABLE  │
   └──────────────┬───────────────┘
                  │
                  ▼
           ┌─────────┐
           │   END   │
           └─────────┘
```

# FIG. 15

START

S40

DETERMINE INDEX j AND CALCULATE i, k, l DETERMINED ACCORDING TO j

S41

READ REDUNDANT VARIABLE FLAG CORRESPONDING TO INDICES i AND l

S42

IS AT LEAST ONE OF TWO REDUNDANT VARIABLE FLAGS 0?

NO

YES

S43

UPDATE VALUE OF STATE VARIABLE BASED ON ΔE

S44

2W1H OPERATION END?

NO

YES

END

Europäisches
Patentamt

European
Patent Office

Office européen
des brevets

# EUROPEAN SEARCH REPORT

Application Number

EP 23 16 4271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 889 843 A1 (FUJITSU LTD [JP]) 6 October 2021 (2021-10-06) * paragraph [0014] – paragraph [0047] * * figures 1,2 * ----- | 1–14 | INV. G06N10/20 G06N7/01 G06N3/044 G06N10/60 |

TECHNICAL FIELDS SEARCHED (IPC)

G06N

The present search report has been drawn up for all claims

| Place of search | Date of completion of the search | Examiner |
|---|---|---|
| The Hague | 28 August 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                  
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 16 4271

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2023

| Patent document cited in search report | | Publication date | Patent family member(s) | | Publication date |
|---|---|---|---|---|---|
| EP 3889843 | A1 | 06-10-2021 | CN | 113449901 A | 28-09-2021 |
| | | | EP | 3889843 A1 | 06-10-2021 |
| | | | JP | 2021157361 A | 07-10-2021 |
| | | | US | 2021303755 A1 | 30-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021157361 A
- JP 2020021209 A
- JP 2016051349 A
- US 20170161612 A